# EUROPEAN PATENT SPECIFICATION

(11) **EP 3 562 878 B1**
(45) Date of publication and mention of the grant of the patent: **05.06.2024**
(21) Application number: 17887562.1
(22) Date of filing: 27.12.2017
(51) Int. Cl.: C08L 3/02, C08L 23/06

(54) **CARBOHYRATE-BASED POLYMERIC MATERIALS**
POLYMERMATERIALIEN AUF KOHLENHYDRATBASIS
MATÉRIAUX POLYMÈRES À BASE D'HYDRATE DE CARBONE

(30) Priority: 29.12.2016 US 201662440399 P; 04.01.2017 US 201762442432 P; 07.04.2017 US 201715481806; 07.04.2017 US 201715481823; 07.04.2017 US 201762483219 P; 30.08.2017 US 201715691588; 08.12.2017 US 201715836555
(43) Date of publication of application: 06.11.2019
(73) Proprietor: Biologiq, Inc., Idaho Falls, ID 83402 (US)
(72) Inventor: LAPRAY, Bradford, Idaho Falls Idaho 83402 (US); QUAN, Wenji, Idaho Falls Idaho 83402 (US); ALLEN, Donald R., Idaho Falls Idaho 83402 (US)
(74) Representative: D Young & Co LLP
(86) International application number: PCT/US2017/068492
(87) International publication number: WO 2018/125897

(56) References cited:
- US-A- 5 714 445
- US-A1- 2002 006 989
- US-A1- 2010 311 874
- US-A1- 2010 311 874
- US-A1- 2012 316 257
- US-A1- 2016 107 426

## Description

### CROSS-REFERENCE TO RELATED APPLICATIONS

This application claims the benefit of U.S. Application No. 15/481,806 (21132.1) filed April 7, 2017; U.S. Application No. 15/481,823 (21132.2) filed April 7, 2017; U.S. Application No. 15/691,588 (21132.7) filed on August 30, 2017; U.S. Application No. 15/836,555 (21132.4.1) filed on December 8, 2017; U.S. Application No. 62/610,615 (21132.9) filed on December 27, 2017; U.S. Application No. 62/610,618 (21132.12) filed on December 27, 2017; U.S. Application No. 62/440,399 (21132.10) filed on December 29, 2016, and U.S. Application No. 62/442,432 (21132.11) filed on January 4, 2017, and U.S. application No. 62/483,219 (21132.4), filed April 7, 2017.

### BACKGROUND

Traditional petrochemical-based plastics are formulated to be strong, lightweight, and durable. However, these plastics are typically not biodegradable, and as a result, hundreds of millions of tons of plastic sits in landfills or floats in the ocean. In trying to reduce the amount of plastic waste, some articles typically produced using petrochemical-based plastics are being produced using biodegradable materials.

Petrochemical-based plastics materials, such as large quantities of polyethylene and polypropylene, as well as numerous other plastics (polyethylene terephthalate, polyester, polystyrene, ABS, polyvinyl chloride, polycarbonate, nylon, and the like) are typically not readily biodegradable. Such is typically the case even for so called "green" plastics of such materials, which may be sourced from renewable or sustainable sources, rather than petro-chemical feedstocks.

While there have more recently been efforts to render such plastic materials increasingly degradable by addition of UV and/or OXO additives (e.g., such as PDQ-M, PDQ-H, BDA, and OxoTerra^{™} from Willow Ridge Plastics, OX1014 from LifeLine, or organic additives (e.g., such as Restore^{®} by Enso, EcoPure^{®} by Bio-Tec Environmental, ECM Masterbatch Pellets 1M by ECM Biofilms, or BioSphere^{®}), use of such additives is generally frowned upon by plastic industry associations (e.g., SPC, APR, FPA, and/or BPI), as the degree of biodegradability and the rate of biodegradation is often too slow, and the OXO additives usually simply initiate structural fragmentation or degradation that accelerates physical deterioration of such plastic materials into small pieces of the underlying base plastic material, rather than the desired actual conversion of the plastic back into natural materials such as carbon dioxide (CO₂), water (H₂O), and methane (CH₄).

For example, such materials simply act to accelerate break-up of the macro-structure of the plastic article itself due to exposure to UV light (from sun exposure) and/or exposure to oxygen. Such specialty plastics may not actually biodegrade to any appreciable degree within a given time frame (e.g., 5 years, 3, years, or 1 year), but simply lose strength, crack, and break up into small pieces. The result is a pile or small pieces of polyethylene or other base plastic material that results as the bottle, film, or other article physically degrades over time due to the addition of the UV and/or OXO additives, but the weight fraction of polyethylene or other base plastic material remains substantially the same, with no real biodegradation actually occurring. The degradation is merely physical, as the article becomes brittle, cracks, and breaks up into small pieces, leaving many small fragments of polyethylene or other base plastic material. Application of the term "biodegradable" to such plastic materials is something of a misnomer, as complete biodegradation of the polymer material itself may not actually be occurring (e.g., where substantial fractions of the plastic would be degraded into CO₂, CH₄, H₂O, and the like).

In addition, most plastics used today are not formed from renewable or sustainable resources (e.g., starting materials which can be renewed within about 100 years or less). The terms renewable and sustainable are used interchangeably herein. Rather, polyethylene (PE), polyethylene terephthalate (PET) and other typical plastics employed in large quantities in bottles, bags, and other packaging are made from petroleum product starting materials, which are not renewable or sustainable.

In an effort to increase sustainability, recently there have been some efforts to develop processes for making such plastic materials from renewable source materials, such as sugarcane, corn, or other plant products, which plant materials are sustainable. For example, such renewable materials may be used to produce ethanol, ethylene glycol, or other chemical building block materials than can be further reacted to produce monomers which can be polymerized. Such efforts have begun to show some promise in premium priced products where such "green" plastic resins may be blended with conventional petrochemical-based resins (e.g., to produce a bottle or other packaging in which a fraction (e.g., 30%) of the materials are sustainable. In fact, some products may now be made from 100% "green" plastic resins.

While blends of such "green" materials and conventional petro-chemical plastics have begun to become available, there are still practical difficulties in replacing the remaining conventional petro-chemical plastic materials with all sustainable materials, in terms of challenges in processing, cost, and other considerations.

In addition, even while reducing use of conventional non-sustainable plastic materials through substitution of some of the material with sustainable plastic materials, the resulting plastic packaging is still not biodegradable. For example, even a plastic package made from 100% "green" plastic or including a fraction of "green" PE or green "PET" is not biodegradable. Such lack of biodegradability presents an enormous continuing problem. It would be a significant advance in the art if articles could be provided which were biodegradable. Increased strength would also be desirable. It would be a further advance if such an article were entirely (or nearly entirely) formed from sustainable materials.

Furthermore, recently efforts have been made to reduce the use of such non-renewable petrochemical-based plastic materials. Some such efforts have attempted to source resins for producing plastic materials from renewable sources, such as from sugarcane or other plant products. While available to some degree, such renewable sourced plastics have been far more expensive to produce than their petrochemical-based non-renewable counterparts.

In addition, plastic materials have particular strength characteristics associated therewith, dependent on the particular material(s) employed in forming the plastic film or other material, and physical characteristics of the film or other article itself. For example, when forming a plastic film, use of the non-renewable petrochemical-based plastic resin material can be reduced by forming a thinner film, but such reductions in material use result in a weaker film.

By way of example, while WO 2014/0190395 to Leufgens describes formation of films from a blend of polyethylene and a thermoplastic starch (particularly Cardia BL-F), such films are weaker than comparable films formed from the polyethylene alone, and because of the difficulties in processing blends including conventional thermoplastic starches, the films produced therein are of necessity very thick (e.g., 0.076 mm (3 mils)). Such very thick films may not result in any actual reduction in the use of the petrochemical based plastic resin material, because thin film formation is impossible as a practical matter, and/or because the inclusion of such thermoplastic starches weakens the overall film, so that a thick film is needed to maintain a desired level of strength.

It would be advantageous to provide films and associated methods of manufacture that might increase strength for any given film thickness, e.g., by adjusting the manufacturing parameters employed during manufacture, when using a renewable sourced plastic material. Such methods would allow a film to be produced at a given thickness with increased strength, or to produce the film at a lower thickness, but with the same strength. Such methods at the same time would result in actual reductions in the quantity of petrochemical plastic material employed, as a portion thereof is substituted with a renewable sourced plastic material, and the overall thickness does not need to be increased.

Furthermore, although replacing a portion of the petrochemical material with starch or a starch-based material has shown some promise with respect to increased sustainability, one issue with addition of such starch or starch-based materials is that the inclusion of a significant fraction of starch or a starch-based material in the plastic composition can result in a noticeable odor associated with the inclusion of such in an article formed from such a blend. For example, the material may take on a slightly burned starch odor, a popcorn-like odor, or a caramel corn type odor. While some may find the odor pleasant, or even desirable, others would prefer that no such odor be present, such as would be the case for a plastic formed without the starch or starch-based material present (e.g., formed from polyethylene or another polymeric resin, alone).
US 2010/311874 discloses a starch-based composition comprising at least 51 wt.% of a plasticized starchy composition constituted of starch and of an organic plasticizer, at most 49 wt.% of one or more non-starchy polymer and a coupling agent.

In light of the above, there remain numerous issues to be addressed in the art.

### SUMMARY

The invention is as defined in the appended claims. This disclosure is directed to various concepts that can be implemented in article manufacture and/or methods of manufacture. In an embodiment, the disclosure is directed to articles that that exhibit increased strength and/or biodegradability. The articles are produced from a mixture of one or more polymeric materials (e.g., synthetic, e.g., petrochemical-based, or otherwise) and one or more starch-based polymeric materials having particular characteristics of low crystallinity (i.e., they are substantially amorphous and have a crystallinity of no more than 20%), glass transition temperature, heat deflection temperature, vicat softening temperature, or the like. The starch-based polymeric material is substantially amorphous, having a crystallinity of no more than 20%, it may have a Young's modulus of at least 1.0 GPa, and/or it may have a glass transition or heat deflection temperature or vicat softening temperature of 70°C to 100°C. The starch-based polymeric material has a water content no greater than 2% by weight and is included in the articles in an amount of from 1% to 40% by weight of the mixture of materials from which the article is produced. Other characteristics of the starch-based materials will be further described herein.

A process to produce an article can include providing one or more polymeric materials and one or more substantially amorphous starch-based polymeric materials. The one or more polymeric materials and the one or more starch-based polymeric materials can be mixed and heated. The resulting mixture can be extruded into a number of plastic products using plastics processing equipment, such as injection molders, blow molders, thermoformers, etc. A gas can be injected into the extruded mixture to form a film. Such films can be processed into a bag or another type of article. Other articles may be extruded plastic products, injection molded plastic products, blow molded plastic products, extruded or cast sheet or films, thermoformed plastic products, and the like.

The articles may exhibit increased strength and/or biodegradability. For example, in an embodiment, blending the substantially amorphous starch -based polymeric material with the other polymeric material lends biodegradability to the other polymeric material, even where the other polymeric material was not itself otherwise biodegradable, alone. For example, polyethylene is notoriously known as not being biodegradable on its own. Applicant has demonstrated the ability to lend biodegradability to plastic materials, such as polyethylene, which materials are not otherwise biodegradable. Other examples of such may include, but are not limited to polypropylene, other polyolefins, polyethylene terephthalate, polyester, polystyrene, ABS, polyvinyl chloride, nylon, and polycarbonate. By way of example, the amount of the article that biodegrades within 5 years or another given time frame under simulated disposal conditions (e.g., simulated landfill conditions) may be greater than an amount of the starch-based polymeric material included in the article. Such simulated disposal conditions may include simulated landfill conditions (e.g., under any typical ASTM standard such as D-5511 and/or D-5526), simulated industrial compost conditions (such as ASTM D-5338), or simulated marine conditions (such as ASTM D-6691). In other words, some of the otherwise non-biodegradable polymeric material is now somehow biodegrading, as well as biodegradation of the starch-based material. For example, if the article is formed from a blend including 25% of the starch-based polymeric material, the amount of the article that biodegrades under such conditions is greater than 25% (i.e., some of the other polymeric material is also degrading, even though such other polymeric material may not degrade under similar conditions on its own).

Third party test results obtained by Applicant show that such degradation can occur relatively rapidly, e.g., sometimes within about 180 days (6 months), within about 1 year, within about 2 years, or within about 3 years, as opposed to within 5 years.

In addition or alternative to biodegradability, the articles and methods may provide increased strength (e.g., an increase in dart strength or other strength characteristic of at least 5%) as compared to strength the article would have if made solely from the other polymeric material, without the starch-based polymeric material.

Another aspect of the present disclosure is directed to articles that are formed with renewable or sustainable "green" plastic materials and the starch-based (starch-based) polymeric materials. For example, in an embodiment the other polymeric material may also be a sustainable "green" polymeric material, sourced from sustainable sources (e.g., plants such as sugarcane, corn, or the like). In an embodiment, the sustainable polymeric material may be processed into a polymer that otherwise exhibits similar if not identical characteristics to a petro-chemical based polymer (e.g., it may be "green" polyethylene, "green" polypropylene, "green" polyethylene terephthalate (PET), or the like). Such a "green" polymer may have similar if not identical chemical and physical properties as compared to the same polymer (e.g., polyethylene) formed from a petro-chemical feedstock. The starch-based polymeric material may actually lend biodegradability characteristics to the sustainable polymeric material with which it is blended or otherwise formed, where such sustainable polymeric material may not otherwise exhibit such biodegradability characteristics (or such characteristics may be enhanced, if the sustainable polymeric material already did exhibit some biodegradability).

In addition or alternative to biodegradability, such articles may exhibit increased strength as compared to otherwise similar articles, but formed within inclusion of the starch-based polymeric material. For example, an embodiment is directed to an article including one or more starch-based polymeric materials, and one or more sustainable polymeric materials sourced from sustainable plant sources, wherein a strength of the article is at least 5% greater than the article would have if made without the starch-based polymeric material. For example, Applicant has discovered that inclusion of such a starch-based polymeric material in the article (e.g., as a blend of the two polymeric materials) can provide increased strength, as compared to what the sustainable polymeric material alone would provide.

Also described herein (but not part of the presently claimed invention) are methods for manipulating blow up ratios and/or die gaps used during film manufacture to increase strength of films produced from such blends of a starch-based polymeric material and another polymeric material. In particular, Applicant has discovered that while the strength of most plastic films blown from various resin materials (e.g., such as polyethylene and/or polypropylene) are not affected by changes in blow-up ratio, that when the renewable starch-based polymeric materials having particular amorphous characteristics, particular glass transition temperature characteristics, vicat softening temperature characteristics, or heat deflection temperature characteristics, and/or particular elastic modulus characteristics as described herein is included in the resin blend from which the film is blown, that strength does become dependent on blow-up ratio and/or die gap, and that it is possible to blow films of extremely narrow gauge. Applicant has actually blown films as thin as 0.0025 mm (0.1 mil), having significant strength, where such thin film blowing is not believed to have been possible previously with any known resins or production methods.

Blow-up ratio refers to the maximum diameter of the blown film divided by the diameter of the die of the film blowing apparatus. Typically, there is some increase in diameter as the molten resin material exits from the die, and begins to travel upwards, through the "frost line" towards the portion of the blown film bubble where the resin material is no longer molten, but has solidified. Solidification and crystallization typically occurs at the frost line, which is the location where opacity or a "frosty appearance" begins to be visible in the blown bubble film. Applicant has observed that when using such particular renewable starch-based polymeric materials as described herein, an increase in strength is obtainable, beyond the strength achieved when blowing an otherwise similar plastic film (but without the starch-based polymeric material). Such increase is achieved by selecting a high blow up ratio and/or a narrow die gap. Such are believed to result in alignment, orientation, and/or stretching of the molecular structures of the starch-based polymeric material, which is homogeneously distributed throughout the resin blend from which the film is formed. Such alignment and orientation of the amorphous renewable starch-based polymeric material within the film is believed to be at least partially responsible for the observed increase in strength.

In other words, as described herein, the particular renewable starch-based polymeric materials may be used in conjunction with the particular described processing conditions to enhance the strength of a given film, not to mention the sustainability benefits associated with replacing a portion of the other polymeric content of the film with the renewable starch-based polymeric material.

In particular, typical existing films are blown at a blow up ratio of about 1.5. Applicant has discovered that by increasing the blow up ratio to at least 2.0, e.g., from 2.2 to 2.8 (e.g., about 2.5), when a renewable starch-based polymeric material such as NuPlastiQ or Eco Starch Resin "ESR", available from Applicant, is included within the resin blend from which the film is formed, that there is a significant increase in film strength at the higher blow-up ratios. For example, a blend of NuPlastiQ or ESR and a typical polymeric resin (e.g., polyethylene and/or polypropylene) may exhibit strength characteristics at a blow-up ratio of 1.5 that are substantially the same as the strength of a film that is otherwise identical, but does not include the NuPlastiQ or ESR.

Such a film (without NuPlastiQ or ESR) does not exhibit any significant increase in strength when the blow-up ratio is increased, and therefore there is no reason to manipulate this value when blowing such films. Applicant has discovered that when including NuPlastiQ or ESR within the resin blend, the strength is significantly increased when using a high blow up ratio (e.g., at least 2.0), as noted above.

Furthermore, NuPlastiQ or ESR does not suffer from many of the problems of alternative thermoplastic starch materials, which inhibit their ability to be used in formation of relatively thin films (e.g., 0.05 mm (2 mils) or less, typically 0.038mm (1.5 mils) or less, such as 0.0025 mm (0.1 mil) to 0.038 mm (1.5 mils)). Such combination of discoveries has allowed Applicant to form films of a given thickness, exhibiting increased strength as compared to films formed of the same material, but without the NuPlastiQ or ESR (or compatibilizer - i.e., formed from the other polymeric material, alone, such as polyethylene). Such discovery also allows production of films of the same strength, but with decreased thickness, when using NuPlastiQ or ESR in the blend. Such results are surprising and advantageous, allowing production of films that include a significant fraction of a renewable resin, while at the same time increasing strength. Such is achieved by manipulating the blow up ratio and/or die gap. Applicants have also discovered that increased strength is also possible by ensuring that the die gap employed in the film blowing apparatus is relatively narrow. Again, narrow die gaps are not possible as a practical matter with many conventional thermoplastic starch blends, as evidenced by Leufgens (where the die gap used was 1.6 to 1.8 mm). The present invention may employ die gaps of 1000 microns or less, more typically 500 microns or less. Thus blow up ratio and/or die gap can be used according to the present methods to provide for increased film strength.

Another aspect of the present disclosure (but not part of the presently claimed invention) is directed to methods for reducing a characteristic odor attributable to inclusion of a starch-based polymeric material as well as articles including such reduced odor. The starch-based polymeric material described herein, as well as other similar starch-based polymeric materials exhibit a characteristic slightly burned starch, popcorn, or caramel corn type odor. While not typically overpowering, this odor is typically noticeable in some articles formed from blends of materials including the starch-based polymeric material, particularly where the geometry of the finished article may be relatively "closed" (e.g., such as in a cup), or other enclosed structure where a volume is bounded by the plastic material on two, three, or more sides. Such a characteristic odor may tend to accumulate within such an enclosed volume, so as to become noticeable to a consumer or other use (e.g., if a user were to put their nose into such a cup and sniff).

Applicant desires to remove or minimize such characteristic odor, so that the odor would be similar or identical to the odor (typically odorless) that would exist if the article were instead formed from a standard (e.g., petrochemical-based) polymeric material. For example, articles according to the present invention may be formed from a blend of such standard "other polymeric material" and the starch-based polymeric material, as described previously and elsewhere herein. Applicant has discovered that the characteristic odor may be substantially removed or minimized by addition of a very small fraction of an odor-reducing agent, particularly an organic odor-reducing agent.

While some attempts may have been made previously by others to reduce odor resulting from a distillers dried grains (DDG) material, e.g., as described in WO2009058426, such treatment required addition of relatively high fractions of activated carbon or steam activated anthracite materials. While perhaps effective to some degree, the concentration of such materials required is high, and the cost of such materials is prohibitive, such that commercial application of such embodiments are not particularly feasible. In addition, addition of high fractions of dark colored activated carbon or activated anthracite materials may be undesirable, given their tendency to act as a pigment under certain conditions, coloring the plastic material. Such may be particularly problematic where a high clarity film, a light colored article, or other similar article, is desired.

An embodiment of the present invention is thus directed to a sustainable plastic material that includes the starch-based polymeric material, another polymeric material, as described above, but also including an odor-reducing agent. In the absence of the odor-reducing agent, the starch-based polymeric material would lend a characteristic burned carbohydrate odor to the sustainable plastic material. In an embodiment, the odor-reducing agent may be organic, and comprise an aromatic compound (e.g., including a benzene ring), such as a benzaldehyde compound, a benzyl ketone compound, or other benzene derivative. In an embodiment, the organic odor-reducing agent may comprise a freeze dried or other extract from a fruit or vegetable, such as vanillin. The organic odor-reducing agent may actually be extracted from such a fruit, vegetable, or other plant, or may comprise an aromatic compound typically found in such an extract, but which has been synthetically produced (e.g., synthetic vanillin or another synthetic aromatic compound may be suitable). Vanillin is an aromatic benzaldehyde compound also known as 4-hydroxy-3-methoxybenzaldehyde.

Applicant has surprisingly found that very small fractions of such an aromatic odor-reducing agent are sufficient to substantially remove any characteristic odor otherwise attributable to the starch-based polymeric material included in the blend making up the sustainable plastic material. For example, the weight ratio of an odor-reducing agent to the starch-based polymeric material to substantially remove the odor is on the order of 1:1000 or less of the odor-reducing agent. For example, as little as 100 ppm, 50 ppm, or even 20 ppm or less is sufficient to remove all practical sign of the characteristic odor.

Such is particularly surprising, given that so little of the odor-reducing agent is needed to remove the odor. Because so little is required, and the odor does not typically seem to be replaced or masked by any odor provided by the odor-reducing agent, it is believed that the mechanism in play may not be a simple masking of the characteristic carbohydrate odor. Although any such mechanism is not perhaps fully understood, it is possible that there may be a chemical interaction between such aromatic or other organic odor-reducing agents and the characteristic odorous compounds generated upon heating the starch-based polymeric material during melting and forming of the thermoplastic blend into the desired article.

The odor-reducing agent may be included with the starch-based polymeric material, e.g., in a masterbatch thereof. Thus, described herein is a sustainable thermoplastic starch-based polymeric material exhibiting reduced odor that includes the organic odor-reducing agent pre-blended with the starch-based polymeric material. A weight ratio of the organic odor-reducing agent to the starch-based polymeric material may be no more than 1:1000 (i.e., at least 1000 times more starch-based polymeric material as compared to the amount of the odor-reducing agent). In an embodiment, the ratio of odor-reducing agent to starch-based polymeric material may be far more dilute, e.g., such as 1:50,000.

It will be apparent that the present disclosure also encompasses related methods, e.g., methods of reducing a characteristic odor of a material blend including a starch-based polymeric material, e.g., by including a small fraction of an organic odor-reducing agent within the blend. Where the starch-based polymeric material is provided as a masterbatch, the odor-reducing agent may be provided within the masterbatch, already blended with the starch-based polymeric material. As such, when the masterbatch is then blended with a polymeric resin material (e.g., any of numerous various plastic resins, such as PE, PP, other polyolefins, polyesters, polystyrenes, PBAT, polycarbonate, or others), the blended material also then includes the odor-reducing agent blended therein.

### BRIEF DESCRIPTION OF THE DRAWINGS

In order that the manner in which the above-recited and other advantages and objects of the invention are obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
FIG. 1 illustrates a flow diagram of an example process of forming an article according to the present disclosure.
FIG. 1A illustrates a flow diagram of an example process for increasing the strength of a blown plastic film by manipulating the blow-up ratio.
FIG. 1B illustrates a flow diagram of an example process for including an odor-reducing agent in the blend of materials including the carbohydrate-based polymeric material and another polymeric material.
FIG. 1C illustrates a flow diagram of an example process for forming a carbohydrate-based polymeric material that includes an odor-reducing agent that counteracts a characteristic odor of the carbohydrate-based polymeric material, and then using the carbohydrate-based polymeric material with odor-reducing agent to produce an article.
FIG. 2A illustrates components of an example manufacturing system to produce articles according to the present disclosure.
FIG. 2B illustrates a close-up schematic view of the film blowing apparatus of FIG. 2A, showing the die, the die gap, the blown film bubble having a high blow-up ratio, and the frost line of the bubble.
FIG. 2C illustrates a close-up schematic cross-sectional view through a portion of the die of FIG. 2B, showing the narrow die gap.
FIG. 3 shows elastic modulus and elongation at break data for various petrochemical plastics that are typically neither biodegradable nor compostable (labeled standard plastics) as well as various plastics that are more "environmentally friendly" in one or more aspects.
FIG. 4 shows X-ray diffraction patterns for an exemplary NuPlastiQ or "ESR" carbohydrate-based polymeric material commercially available from BiologiQ as compared to that of the blend of native corn starch and native potato starch used to form the NuPlastiQ or ESR.
FIG. 5 shows dart strength for different thickness films based on percentage of carbohydrate-based polymeric material in the film.
FIG. 6 shows dart strength for different thickness films (from about 0.0025 mm (0.1 mil) up to 0.05 mm (2 mils)) formed from a blend of 25% carbohydrate-based polymeric material, about 5% compatibilizer, and about 70% PE, as compared to 100% PE film, and also showing comparison for existing produce bags, haul out bags, and potato bags.
FIG. 7 shows dart strength for different thickness films for various blended films including NuPlastiQ or ESR, as well as comparative films formed from virgin or recycled materials.
FIGs. 8A-8B show percent biodegradation measured over 349 days according to testing conducted under ASTM D-5511 for three samples formed according to the present disclosure.
FIG. 9 shows percent biodegradation measured over 843 days according to testing conducted under ASTM D-5526 for potato bags made with 25% NuPlastiQ or ESR, 70% PE, and 5% compatibilizer under simulated landfill conditions.
FIGs. 10A-10B shows percent biodegradation measured over 370 days according to testing conducted under ASTM D-5338 for various samples made according to the present disclosure, as well as comparative controls.
FIG. 11 shows percent biodegradation measured over 205 days according to ASTM D-6691, meant to simulate marine conditions, for various samples made according to the present disclosure, as well as comparative controls.
FIG. 12A shows dart strength for films made with a blend of NuPlastiQ or ESR carbohydrate-based polymeric material and a biopolyethylene or "green" PE. Dart strength is shown as a function of NuPlastiQ or ESR percentage, for films of various thicknesses.
FIG. 12B presents similar data as FIG. 12A, but shows dart strength as a function of film thickness, for blends including varying percentages of NuPlastiQ or ESR.
FIG. 13 shows dart strength for films formed from a blend including 25% NuPlastiQ or ESR material with the balance being a compatibilizer and polyethylene at a blow up ratio of 2.5, as compared to dart strength for films formed entirely from polyethylene, which polyethylene films do not exhibit strength dependency on blow-up ratio.

### DETAILED DESCRIPTION

### I. Definitions

The term "comprising" which is synonymous with "including," "containing," or "characterized by," is inclusive or open-ended and does not exclude additional, unrecited elements or method steps.

The term "consisting essentially of' limits the scope of a claim to the specified materials or steps "and those that do not materially affect the basic and novel characteristic(s)" of the claimed invention.

The term "consisting of' as used herein, excludes any element, step, or ingredient not specified in the claim.

The terms "a," "an," "the" and similar referents used in the context of describing the inventive features (especially in the context of the following claims) are to be construed to cover both the singular and the plural, unless otherwise indicated herein or clearly contradicted by context. Thus, for example, reference to a "starch" can include one, two or more starches.

"Film," as used herein, refers to a thin continuous article that includes one or more polymeric materials that can be used to separate areas or volumes, to hold items, to act as a barrier, and/or as a printable surface.

"Bag," as used herein, refers to a container made of a relatively thin, flexible film that can be used for containing and/or transporting goods.

"Bottle," as used herein, refers to a container that can be made from the presently disclosed plastics, typically of a thickness greater than a film, and which typically includes a relatively narrow neck adjacent an opening. Such bottles may be used to hold a wide variety of products (e.g., beverages, personal care products such as shampoo, conditioner, lotion, soap, cleaners, and the like).

Unless otherwise stated, all percentages, ratios, parts, and amounts used and described herein are by weight.

Numbers, percentages, ratios, or other values stated herein may include that value, and also other values that are about or approximately the stated value, as would be appreciated by one of ordinary skill in the art. A stated value should therefore be interpreted broadly enough to encompass values that are at least close enough to the stated value to perform a desired function or achieve a desired result, and/or values that round to the stated value. The stated values include at least the variation to be expected in a typical manufacturing process, and may include values that are within 25%, 15%, 10%, within 5%, within 1%, etc. of a stated value. Furthermore, the terms "substantially", "similarly", "about" or "approximately" as used herein represent an amount or state close to the stated amount or state that still performs a desired function or achieves a desired result. For example, the term "substantially" "about" or "approximately" may refer to an amount that is within 25% of, within 15% of, within 10% of, within 5% of, or within 1% of, a stated amount or value.

Some ranges are disclosed herein. Additional ranges may be defined between any values disclosed herein as being exemplary of a particular parameter. All such ranges are contemplated and within the scope of the present disclosure. Further, recitation of ranges of values herein is intended to serve as a shorthand method of referring individually to each separate value falling within the range. Unless otherwise indicated herein, each individual value is incorporated into the specification as if it were individually recited herein.

All numbers expressing quantities of ingredients, constituents, conditions, and so forth used in the specification and claims are to be understood as being modified in all instances by the term "about". Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

The phrase `free of or similar phrases as used herein means that the composition comprises 0% of the stated component, that is, the component has not been intentionally added to the composition. However, it will be appreciated that such components may incidentally form under appropriate circumstances, may be incidentally present within another included component, e.g., as an incidental contaminant, or the like.

The phrase 'substantially free of or similar phrases as used herein means that the composition preferably comprises 0% of the stated component, although it will be appreciated that very small concentrations may possibly be present, e.g., through incidental formation, incidental contamination, or even by intentional addition. Such components may be present, if at all, in amounts of less than 1%, less than 0.5%, less than 0.25%, less than 0.1%, less than 0.05%, less than 0.01%, less than 0.005%, less than 0.001%, or less than 0.0001%.

### II. Introduction

The present disclosure is directed to, among other things, articles that are formed from blends including a renewable or sustainable starch-based polymeric material materials, in combination with another polymeric material. In addition to increased sustainability, such articles may exhibit biodegradability, and/or increased strength. Articles can be formed by mixing one or more starch-based polymeric materials and one or more other polymeric materials (e.g., petrochemical-based or a "green" sustainable polymeric version of such plastic resin), heating the mixture, and forming an article therefrom, e.g., by extruding, injection molding, blow molding, blow forming, or the like. The starch-based polymeric materials includes starch-based polymeric materials that are substantially amorphous, and/or exhibit other specific characteristics relating to glass transition temperature, heat deflection temperature, vicat softening temperature, Young's modulus and low crystallinity, as described herein.

The articles described herein can be produced in the form of any conceivable structure, including, but not limited to bottles, boxes, other containers, cups, plates, utensils, sheets, films and bags. Thin films for bags and film wraps (e.g., for wrapping around or over a product) can easily be made using blown film equipment. Other processes that may be used for article formation may include injection molding, blow molding, thermoforming, and other plastic manufacturing processes.

Examples of suitable starch-based polymeric materials for use in forming such articles are available from BiologiQ, under the tradename NuPlastiQ or ESR ("Eco Starch Resin"). Specific examples include, but are not limited to GS-270, GS-300, and GS-330. Specific characteristics of such NuPlastiQ or ESR materials will be described in further detail herein. Other starch-based polymeric materials exhibiting similar properties may also be suitable for use, such that NuPlastiQ or ESR available from BiologiQ is merely an example of a suitable starch based polymeric material.

In an embodiment, the "other" polymeric material included in the blend (other than the starch-based polymeric material) may be a sustainable polymeric material, e.g., formed from plant or other renewable sources (e.g., bacterial products). As such, all or substantially all (e.g., 90% or more, 95% or more, 97% or more, 98% or more, 99% or more) of the polymeric content of the article can be formed from polymers sourced from plant or other renewable sources. Such characteristic is particularly advantageous, from a sustainability perspective. As described herein, a small fraction of a compatibilizer may be present in addition to the polymeric content, to increase compatibility between the "other" polymeric resin material and the starch-based polymeric material. In some embodiments, such compatibilizer may be the only component that is not sourced or derived from sustainable sources. In other embodiments, such compatibilizer may be sustainable, such that 100% of the article could potentially be sustainably sourced.

In addition to desirable sustainability characteristics, the starch-based polymeric material may be configured to provide the material with which it is blended (the "green" sustainable polymeric material, such as "green" PE (or biopolyethylene), "green" PP, or BioPET) with biodegradability. In other words, even where the "green" sustainable polymeric material is not alone itself biodegradable, its inclusion in the article which also includes the starch-based polymeric material can actually result in its becoming biodegradable. Such a result is also of great advantage.

In addition, many articles (e.g., particularly thin films) do not have particularly good strength when formed from conventional plastic materials (e.g., petrochemical-based polymeric materials), such that increased strength at a given thickness would be desirable. Because "green" plastic materials exhibit physical characteristics that are similar to their corresponding conventional petrochemical-based cousins, such "green" plastic materials also do not have particularly good strength, and a means for increasing strength, without increasing article thickness would be desirable. When blended with starch-based polymeric materials as described herein, such increased strength results are achievable. For example, while a polyethylene film (e.g., either bio-polyethylene ("green" PE) or metallocene petrochemical-based PE) may have a dart impact strength of about 150 g for a 0.025 mm (1 mil) thick film, it would be advantageous if the strength could be increased, without increasing film thickness. The present embodiments can provide such increased strength. For example, upon blending with a starch-based polymeric material as described herein, strength may increase by at least 5%. Typical results of some embodiments may result in strength increases of 20% or even more.

The articles can be produced by mixing the starch-based polymeric material and the sustainable polymeric material, heating the mixture, and molding (e.g., injection molding) the mixture, extruding the mixture, blow molding the mixture, blow forming the mixture, or thermoforming the mixture. Various other plastic manufacturing processes will be apparent to those of skill in the art in light of the present disclosure.

With respect to biodegradability, the methods and articles may provide lend biodegradability to a plastic material that itself is not otherwise biodegradable by blending such plastic material with the starch-based polymeric materials having specific characteristics, including low crystallinity, as described herein. Such embodiments are particularly beneficial in that they allow numerous plastic items that are thrown out to be readily biodegraded in a landfill or similar environment, rather than continuing to exist in their polymeric, stable state, indefinitely.

Furthermore, Applicant has observed that biodegradation of such articles does not readily occur where the articles are stored in typical storage and use environments (e.g., stored in a home, office, warehouse, or the like), but that biodegradation generally only begins to occur where the article is placed in an environment that simulates or is that of a landfill or compost or other typical disposal conditions. For example, such conditions often include (i) a temperature that is somewhat elevated above normal ambient "use" or "storage" temperatures, (ii) exposure to elevated moisture levels, and (iii) exposure to particular classes of microbes indigent to landfills or compost and similar disposal environments. Elevated temperature and moisture will not cause degradation of such articles unless the necessary microorganisms are also present. The combination of such conditions causes the articles formed from such a blend of materials to begin to biodegrade. Third party testing as described herein confirms that not only is the starch-based polymeric material biodegrading, but that the plastic material which is otherwise not biodegradable is actually also biodegrading, as well.

While the mechanisms by which such biodegradation becomes possible upon blending with the starch-based polymeric material may not be completely understood, it is believed that blending the two plastic materials together, coupled with perhaps particular characteristics of the starch-based polymeric material somehow breaks the hygroscopic barrier associated with the non-biodegradable plastic materials, allowing the microbes that would biodegrade the starch-based polymeric material to not only biodegrade the starch-based polymeric material, but to also biodegrade the adjacent plastic molecules as well. The carbon bonds are being broken and the biodegradation is confirmed based on third party tests that capture and measure the carbon dioxide and methane that is off-gassed. Such results are surprising, unexpected, and particularly advantageous.

Another aspect of the present disclosure (but not part of the presently claimed invention) is directed to methods for providing increased strength to a blown plastic film, in at least some embodiments by manipulating blow up ratio and or die gap. Such methods may include blowing a plastic film with a film blowing apparatus, the film being blown from a blend including a polymeric material (e.g., polyethylene or the like) and the renewable starch-based polymeric materials described herein, wherein the renewable starch-based polymeric material is substantially amorphous, having a crystallinity of no more than 20%, and/or includes other particular characteristics. For example, the renewable starch-based polymeric material may have a Young's modulus of at least 1.0 GPa, and/or it may have a glass transition temperature, vicat softening temperature or heat deflection temperature of 70°C to 100°C. The film blowing apparatus is specifically operated at a high blow up ratio of at least 2.0 when blowing the plastic film, and/or with a narrow die gap (e.g., no more than 500 microns). Such characteristics, when using the starch-based polymeric material have been found by Applicant to surprisingly provide increased strength to the plastic film, as compared to the strength that would be provided at a lower, more typical blow up ratio (e.g., 1.5) or wider die gap. Such comparison showing increased strength may be with the same material, while just altering either blow up ratio or die gap. Such increased strength may also be exhibited as compared to the strength that would be provided when blowing the film using the "other" polymeric material (e.g., polyethylene) alone, without the NuPlastiQ or ESR or other renewable starch-based polymeric material having particular characteristics as identified herein. When blowing PE alone, blow up ratio and die gap do not significantly affect strength.

Such methods may include a step of specifically selecting the high blow up ratio and/or narrow die gap in order to provide increased strength to the resulting blown film, as opposed to any other purpose for which one might conceivably manipulate the blow up ratio (e.g., to perhaps manipulate the lay flat width of the resulting film).

For example, Applicant has discovered that when blowing film from the "other" polymeric material, such as polyethylene, alone, there is no significant effect on strength as the blow up ratio is manipulated. Furthermore, Applicant discovered that when adding a renewable starch-based polymeric material such as NuPlastiQ or ESR to the blend from which the film is blown, there is no significant decrease in strength for such a blended film, as compared to the 100% polyethylene or other polymeric material film, when blown at the same typical 1.5 blow up ratio typically employed in blowing films. Applicant has though further discovered that increases in strength can actually be achieved when blowing a blended film including a renewable starch-based polymeric material such as NuPlastiQ or ESR by increasing the blow up ratio, e.g., to at least 2.0, preferably from 2.2 to 2.8 (e.g., 2.5).

While it is not completely understood why strength increases at the higher blow up ratios, where no such affect over strength occurs with films formed from the "other" polymeric material alone, it is believed that there may be some type of alignment orientation, stretching, or ordered arrangement of the amorphous or other structures of the molecules of the blend when the blow up ratio is increased, resulting in increased strength. In any case, while perhaps not fully understood, Applicant has observed and measured increased strength under the conditions and methods described herein.

Articles can be produced by mixing the renewable starch-based polymeric material with the other polymeric material (e.g., a polyolefin such as polyethylene, or other plastic), heating the mixture, and feeding the molten mixture to a film blowing apparatus, which is specifically operated at a high blow up ratio and/or narrow die gap, which selection(s) is or are made specifically for the purpose of providing increased strength to the resulting film. The blown films can be further processed into a wide variety of conceivable structures, including, but not limited to plastic bags, film wraps, and the like.

Another aspect of the present disclosure is directed to embodiments in which a burned carbohydrate characteristic odor resulting during typical heating and molding or other forming of the plastic material is counteracted by inclusion of a very small fraction of an odor-reducing agent, preferably an organic odor-reducing agent. In an embodiment, the odor-reducing agent may be included with the starch-based polymeric material (e.g., as part of a masterbatch of the starch-based polymeric material).

In an embodiment, the starch-based polymeric material may be present at far higher fractions than the odor-reducing agent. For example, the starch-based polymeric material may be at least 1000 times, 10,000 times, or 50,000 times more plentiful than the odor-reducing agent. Even at very small concentrations (e.g., 1 part odor-reducing agent to 50,000 parts starch-based polymeric material), effective control (i.e., substantially complete removal) of the popcorn, caramel corn, or slightly burned starch odor can be achieved. It is surprising that such a small fraction of the odor-reducing agent is sufficient to achieve such results.

A masterbatch including the odor-control agent and the starch-based polymeric material can be blended with practically any conceivable polymeric resin material, and used to produce a desired plastic article. For example, articles can be produced by mixing the starch-based polymeric material (including an odor-reducing agent) with the polymeric resin, heating the mixture, and molding (e.g., injection molding) the mixture, extruding the mixture, blow molding the mixture, blow-forming the mixture (e.g., forming a blown film), thermoforming the mixture, or the like. The foregoing list of plastic manufacturing processes is of course not exhaustive, and various other plastic manufacturing processes will be apparent to those of skill in the art.

A small fraction of an odor-reducing agent may be included within the starch-based polymeric material, introduced with a polymeric resin with which the starch-based polymeric material is being blended, or otherwise introduced into the blend. In an embodiment, a masterbatch of the starch-based polymeric material may be provided with the odor-reducing agent already included therein. In another embodiment, the odor-reducing agent could be added separate from the starch-based polymeric material, and/or separate from a polymeric resin that is included in the blend from which an article is to be formed. Besides NuPlastiQ or ESR available from BiologiQ, it will be apparent that other starch-based or starch-based polymeric materials could also benefit from addition of a small fraction of an odor-reducing agent as described herein.

### III. Exemplary Articles and Methods

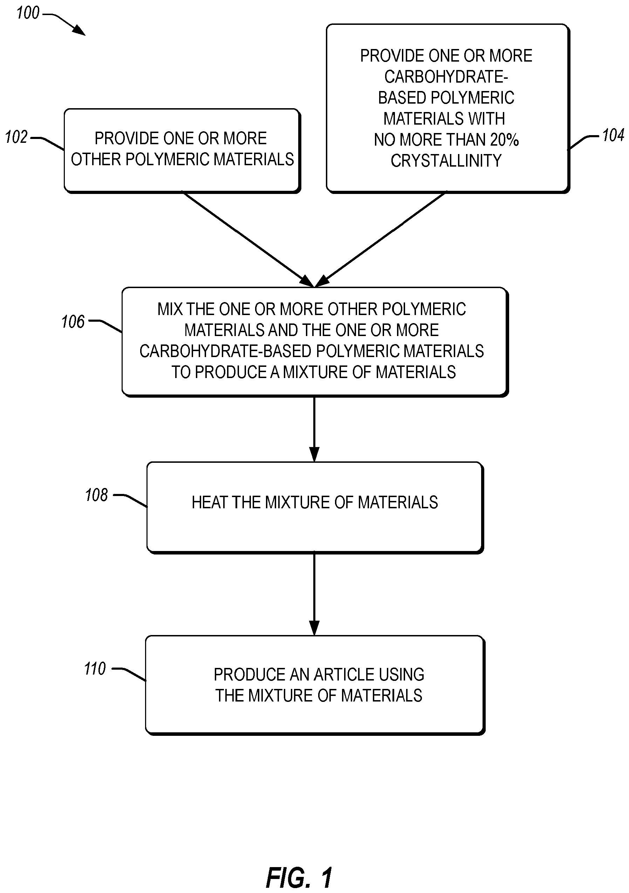

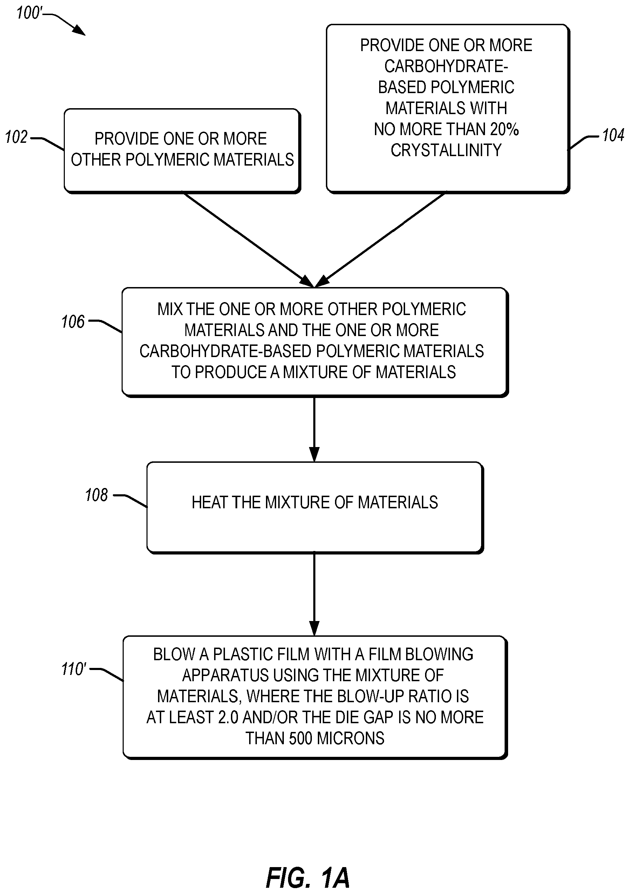

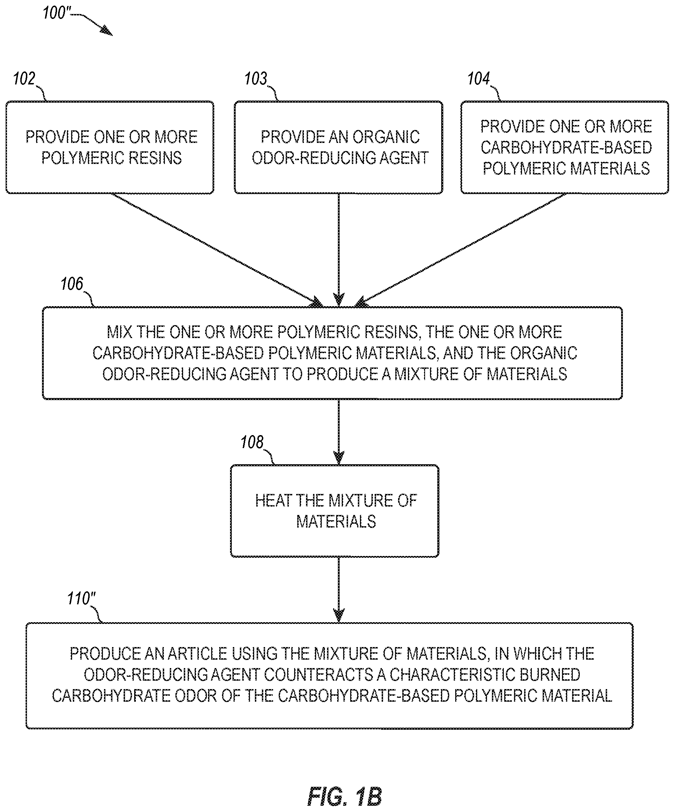

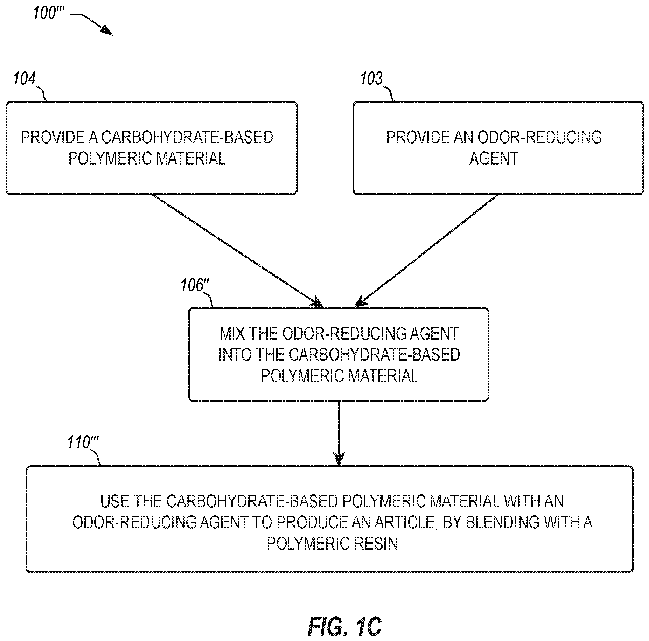

FIG. 1 illustrates an exemplary "basic" process 100 according to the present invention. It will be apparent from the disclosure that various specifics may be added, such as inclusion of an odor-reducing agent, providing that the "other" polymeric material comprises a sustainable resin itself (e.g., "green" PE, bioPET, or the like), or specific selections when blowing a film, with respect to blow up ratio and/or die gap. At 102, the process 100 can include providing one or more "other" polymeric materials, e.g., typically, although not necessarily, non-biodegradable materials (e.g., including, but not limited to polyethylene, polypropylene, other polyolefins, polyethylene terephthalate, polyester, polystyrene, ABS, polyvinyl chloride, nylon, or polycarbonate). At 104, the process 100 can include providing one or more starch-based polymeric materials, which are substantially amorphous, exhibiting a crystallinity of no more than 20% (e.g., more typically less than 10%). Other characteristics may alternatively or additionally be present (e.g., Young's modulus of 1.0 GPa or greater, glass transition temperature, vicat softening temperature or heat deflection temperature of at least 70°C, at least 80°C, or from 80°C to 100°C). The starch-based polymeric materials and the other polymeric material can be provided in a desired form, such as pellets, powders, nurdles, slurry, and/or liquids. In specific embodiments, the materials can be in the form of pellets. The method further includes blending the other polymeric material with the starch-based polymeric material.

Such blends may be formed in manufacture into a desired article through any conceivable process. An example of such would be an extrusion process. For example, the other polymeric material and the starch-based polymeric material can be feed into an extruder (e.g., into one or more hoppers thereof). The different materials can be fed into the extruder into the same chamber, into different chambers, at approximately the same time (e.g., through the same hopper), or at different times (e.g., through different hoppers, one being introduced into the extruder earlier on along the screw than the other), etc. It will be apparent that many numerous possibilities are possible.

In some cases, the other polymeric material can include a polyolefin. For example, such plastic or polymeric materials may include, but are not limited to polyethylene polypropylene polyethylene terephthalate, other polyolefins, polyester, polystyrene, ABS, polyvinyl chloride, nylon, polycarbonates, and the like. Such plastic material may be sourced from petrochemical sources, or from so-called "green" or sustainable sources (e.g., "green" PE, bioPET, and the like).

In some cases, the "other" polymeric material can itself be sustainable, e.g., a sustainable polyolefin. For example, such sustainable polymeric materials can include, but are not limited to, a "green" polyethylene (bioPE), a "green" polypropylene (bioPP), a bioPET, or other plastic material that can be formed from sustainable plant sources. By way of non-limiting example, "green" PE can be derived from ethanol that may be formed from sugarcane, other sugar crops (e.g., sugar beets) or a grain (e.g., corn, wheat, or the like). "Green" PE (also sometimes referred to as "bioPE" has a similar chemical structure as PE formed from a petrochemical feedstock, but in which the ethanol, or the ethylene monomer used in polymerization is derived from sustainable sources, rather than a petrochemical feedstock. "Green" PP could similarly be formed from propylene that may be derived from propanol (or perhaps isopropanol) derived from sugarcane, other sugar crops, or grains (e.g., corn). Another example of a "green" sustainable polymeric material is bioPET, e.g., where the monomers used in forming the poly(ethylene terephthalate) (e.g., typically ethylene glycol and terephthalic acid) may similarly be derived from plant sources such as sugarcane, other sugar crops, or grains. PET is the most common thermoplastic resin of the polyester family. Another polyester that could similarly be formed from sustainable plant sources is polybutyrate adipate terephthalate (bioPBAT). PBAT can be formed as a copolyester of adipic acid, 1,4 butanediol and dimethyl terephthalate. One or more of such starting materials can be derived from sustainable plant sources. Another possible "green" polymeric resin material that may be used is poly(lactic acid). PLA is typically produced from monomers of lactic acid and/or lactide esters, as will be appreciated by those of skill in the art. One or more starting materials for PLA production could be derived from sustainable plant sources. Other possible "green polymers that will be familiar to those of skill in the art that could be used include PBS (polybutylene succinate) or PCL (polycaprolactone).

Those of skill in the art will be familiar with processes for synthesizing such polymers. One or more of the components used for manufacture of such polymers could be derived from a suitable renewable plant or other renewable biological source (e.g., bacterial generation). "Green" PE is available from Braskem, bioPET is available from and used in Coca Cola^{™}'s Plant Bottle^{™} and likely from other plastics manufacturers as well. While PE, PP, PET and PBAT are examples of "green" bioplastics that may be formed from materials derived from sustainable plant sources, it will be appreciated that numerous other "green" plastics may also be suitable for use, so long as they can be formed at least in part from sustainable materials (e.g., plant sources). In addition, while sugarcane, other sugar crops, corn, wheat and other grains may be exemplary nonlimiting examples of plant materials from which such "green" polymeric materials can be derived, it will be appreciated that numerous other plants and materials may also suitably be used.

The starch-based polymeric materials can be formed from a plurality of materials (e.g., a mixture) including one or more starches. For example, the one or more starches can be produced from one or more plants, such as corn starch, tapioca starch, cassava starch, wheat starch, potato starch, rice starch, sorghum starch, and the like. In some embodiments, a mixture of different types of starches may be used, which Applicant has found to result in a synergistic increase in strength. A plasticizer is also present within the mixture of components from which the starch-based polymeric materials are formed. Water may also be used in forming the starch-based polymeric material, although only a small to negligible amount of water (no greater than 2% by weight) is present in the finished starch-based polymeric material.

It will be appreciated that in some embodiments then, the entire polymeric content (or substantially the entire polymeric content) of the article may be derived from plant materials. While the "green" polymeric material typically employs polymerizable monomers or other small molecule polymerizable components that may be derived from ethanol (or the like) formed from a desired plant material, the starch-based polymeric material may be formed from starch (and glycerin or another plasticizer), rather than processing such starch or other plant materials to form smaller polymerizable monomers. Thus, the molecular weight of the starch(es) used to make the starch-based polymeric material may typically be orders of magnitude greater than the molecular weight of the relatively small molecule monomers produced for use in making the "green" sustainable polymeric material. For example, the plant sourced monomers or other polymerizable components used in making the "green" sustainable polymeric material may typically be less than about 500 Daltons, less than 400 Daltons, less than 300 Daltons, less than 200 Daltons, or less than 100 Daltons, while the molecular weight of the starch(es) used in making the starch-based polymeric material may typically be significantly higher, often more than 500 Daltons, often measured in thousands, tens of thousands, or even higher (e.g., more than 500 Daltons, at least 1000 Daltons, at least 10,000 Daltons, at least 25,000 Daltons, at least 40,000 Daltons, or the like). In other words, the starch materials (e.g., native starches) used in forming the starch-based material are typically more complex molecules than the monomers or other polymerizable components used in making the "green" sustainable polymeric material. For example, corn starch may have a molecular weight of about 693 Daltons. Potato starch may have a molecular weight that may vary widely, e.g., from about 20,000 Daltons to about 400 million Daltons (e.g., amylose may range from about 20,000 Daltons to about 2 million Daltons, while amylopectin may range from about 65,000 Daltons to about 400 million Daltons). Tapioca starch may have a molecular weight ranging from about 40,000 Daltons to about 340,000 Daltons. The glycerin employed in forming the starch-based polymeric material may also be derived from sustainable sources. Glycerin of course has a molecular weight of 92 Daltons.

Returning to characteristics of the starch-based polymeric material, the one or more starch-based polymeric materials can be formed from mostly starch. For example, at least 65%, at least 70%, at least 75%, or at least 80% by weight of the starch-based polymeric material may be attributable to the one or more starches. In an embodiment, from 65% to 90% by weight of the finished starch-based polymeric material may be attributed to the one or more starches. Other than negligible water content, the balance of the finished starch-based polymeric material may be attributed to the plasticizer (e.g., glycerin). The percentages above may represent starch percentage relative to the starting materials from which the starch-based polymeric material is formed, or that fraction of the finished starch-based polymeric material that is derived from or attributable to the plasticizer (e.g., at least 65% of the starch based polymeric material may be attributed to (formed from) the starch(es) as a starting material). Although some water may be used in forming the starch-based polymeric material, substantially the balance of the starch-based polymeric material may be attributed to glycerin, or another plasticizer. Very little residual water (e.g., less than 2%, typically no more than about 1%) may be present in the finished starch-based polymeric material.

For example, the materials from which the one or more starch-based polymeric materials are formed can include at least 12%, at least 15%, at least 18%, at least 20%, at least 22%, no greater than 35%, no greater than 32%, no greater than 30%, no greater than 28%, or no greater than 25% by weight of a plasticizer. Such percentages may represent that fraction of the finished starch-based polymeric material that is derived from or attributable to the plasticizer (e.g., at least 12% of the starch based polymeric material may be attributed to (formed from) the plasticizer as a starting material).

Exemplary plasticizers include, but are not limited to glycerin, polyethylene glycol, sorbitol, polyhydric alcohol plasticizers, hydrogen bond forming organic compounds which do not have a hydroxyl group, anhydrides of sugar alcohols, animal proteins, vegetable proteins, aliphatic acids, phthalate esters, dimethyl and diethyl succinate and related esters, glycerol triacetate, glycerol mono and diacetates, glycerol mono, di, and tripropionates, butanoates, tearates, lactic acid esters, citric acid esters, adipic acid esters, stearic acid esters, oleic acid esters, other acid esters, or combinations thereof. Glycerin may be preferred.

The finished starch-based polymeric material may include no greater than 2%, no greater than 1.5%, no greater than 1.4%, no greater than 1.3%, no greater than 1.2%, no greater than 1.1%, or no greater than 1% by weight water. The NuPlastiQ or ESR materials available from BiologiQ are examples of such finished starch-based polymeric materials, although it will be appreciated that other materials available elsewhere (e.g., at some future time) may also be suitable for use.

In some embodiments, mixtures of different starches may be used in forming the starch-based polymeric material. Use of such a mixture of different starches (e.g., coming from different plants) has been found to surprisingly be associated with a synergistic increase in strength in articles including such starch-based polymeric materials. In such a mixture of starches, a starch can be present in the mixture in an amount of at least 1%, at least 2%, at least 3%, at least 4%, at least 5%, at least 10%, at least 15%, at least 20%, at least 25%, at least 30%, at least 35%, at least 40%, no greater than 95%, no greater than 90%, no greater than 85%, no greater than 80%, no greater than 75%, no greater than 70%, no greater than 65%, no greater than 60%, no greater than 55%, no greater than 50%, or from 10% to 50% by weight relative to the combined weight of the plurality of starches. Some non-limiting exemplary mixtures may include 90% of a first starch, and 10% of a second starch, or 30% of a first starch and 70% of a second starch, or 50% of a first starch and 50% of a second starch. Mixtures of more than two starches (e.g., using 3 or 4 different starches) can also be used.

Examples of suitable starch-based polymeric materials for use in forming films and other articles are available from BiologiQ, located in Idaho Falls, Idaho, under the tradename NuPlastiQ or ESR ("Eco Starch Resin"). Specific examples include, but are not limited to GS-270, GS-300, and GS-330. NuPlastiQ or ESR may be provided in pellet form. Physical characteristics for GS-270 and GS-300 are shown in Table 1 below.

**Table 1**

| **PROPERTY** | **TEST METHOD** | ***GS-270 NOMINAL* VALUE** | **GS-300 NOMINAL VALUE** |
|---|---|---|---|
| Density | ASTM D-792 | 1.40 g/cm³ | 1.42 g/cm³ |

| **THERMAL PROPERTIES** | | | |
|---|---|---|---|
| Melt Flow Index 200°C / 5kg | ASTM D-1238 | 1.98 g/10 min | 1.95 g/10 min |
| Melting Temp. Range | ASTM D-3418 | 166-180°C | 166-180°C |
| Glass Transition Temp. | ASTM D-3418 | 81-100°C | 81-100°C |

| **MECHANICAL PROPERTIES** | | | |
|---|---|---|---|
| Tensile Strength @ Yield | ASTM D-638 | >30 MPa | >14 MPa |
| Tensile Strength @ Break | ASTM D-638 | >30 MPa | >14 MPa |
| Young's Modulus | ASTM D-638 | 1.5 GPa | 1.5 GPa |
| Elongation at Break | ASTM D-638 | <10% | <10% |
| Impact Resistance (Dart) | ASTM D-5628 | 3.5 kg | 4.5 kg |

| **ADDITIONAL PROPERTIES** | | | |
|---|---|---|---|
| Water Content | ASTM D-6980 | ≤1.5%, or ≤1% | ≤1.5%, or ≤1% |

The above characteristics shown for GS-270 and GS-300 are exemplary of other NuPlastiQ or ESR products available from BiologiQ, although values may vary somewhat. For example, NuPlastiQ or ESR products from BiologiQ may generally have a glass transition temperature, vicat softening temperature or heat deflection temperature that is at least 70°C, at least 75°C, at least 80°C, up to 200°C, up to 150°C, up to 125°C, up to 110°C, or ranging from about 70°C to about 100°C, or from 80°C to 100°C. Those of skill in the art will appreciate that glass transition temperature, vicat softening temperature and heat deflection temperature can be indicative of degree of crystallinity. Values for melting temperature range, density, Young's Modulus, and water content may be identical or similar to those shown above in Table 1. Some characteristics may similarly vary somewhat (e.g., ±25%, or ±10%) from values shown for GS-270 and GS-300. NuPlastiQ or ESR has an amorphous structure (e.g., more amorphous than typical raw starch). For example, typical raw starch powder has a mostly crystalline structure (e.g., greater than 50%), while NuPlastiQ or ESR has a mostly amorphous structure (e.g., less than 10% crystalline). Any suitable standard may be used for measuring glass transition temperature, heat deflection temperature, vicat softening temperature or any other physical characteristic. By way of example, glass transition temperature may be determined according to ASTM D-3418, heat deflection temperature by ASTM D-648 and vicat softening temperature by ASTM D-1525.

NuPlastiQ or ESR has a low water content, as described. As NuPlastiQ or ESR absorbs moisture, it exhibits plastic behavior and becomes flexible. When removed from a humid environment, the material dries out and becomes stiff again (e.g., again exhibiting less than about 1% water content). The moisture present in NuPlastiQ or ESR (e.g., in pellet form) may be released in the form of steam during processing such as that shown in FIG. 1. As a result, films or other articles produced from a starch-based polymeric material such as NuPlastiQ or ESR blended with a non-biodegradable plastic material may exhibit even lower water content, as the non-biodegradable plastic material typically will include no or negligible water, and the water in the NuPlastiQ or ESR may typically be released during manufacture of a desired article.

Low water content in the starch-based polymeric material can be important, as significant water content can result in incompatibility with the non-biodegradable plastic material, particularly if the article requires formation of a thin film. For example, as the water vaporizes, this can result in voids within the film or other article, as well as other problems. When blowing a thin film, the starch-based polymeric material used may preferably include no more than about 1% water.

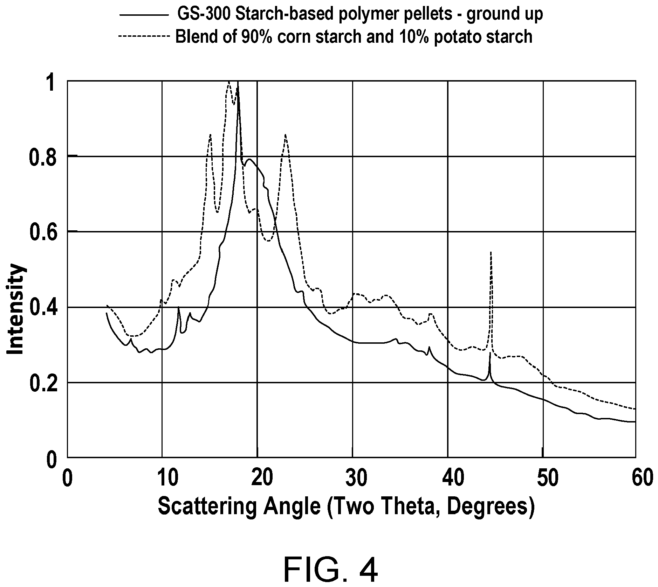

Low water content is not achieved in the NuPlastiQ or ESR material through esterification, as is common in some conventional TPS materials that may include relatively low water content. Such esterification can be expensive and complex to perform. The same may be said of etherification. Furthermore, the NuPlastiQ or ESR materials that are exemplary of the starch-based polymeric materials employable herein also typically do not themselves actually include any identifiable starch, or identifiable glycerin, as such, as the starting materials of the NuPlastiQ or ESR or other starch-based polymeric material have been chemically reacted and/or altered. X-ray diffraction patterns of exemplary starch-based polymeric materials as described below (e.g., and shown in FIG. 4) evidence such chemical alteration, showing that the finished polymeric material may be substantially devoid of starch in such identifiable, native form. In other words, the starch-based polymeric material is not simply recognized as a mixture including starch and glycerin. The low water content achievable in the starch-based polymeric material is believed to be due at least in part to the chemical alteration of the starch and plasticizer materials into a thermoplastic polymer, which does not retain water as would native starch, or conventional thermoplastic starches.

Returning to FIG. 1, processing at relatively high temperatures may result in some release of volatized glycerin (e.g., visible as smoke). If needed (e.g., where stored pellets may have absorbed additional water), drying of pellets can be performed by simply introducing warm dry air, e.g., at 60°C for 1-4 hours, which is sufficient to drive off any absorbed water. Pellets should be dried to less than about 1% moisture content prior to processing, particularly if forming a film. NuPlastiQ or ESR pellets may simply be stored in a sealed container with a desiccant in a dry location, away from heat to minimize water absorption, and to prevent undesired degradation.

In addition to NuPlastiQ or ESR being thermoplastic, the NuPlastiQ or ESR may also be thixotropic, meaning that the material is solid at ambient temperature, but flows as a liquid when heat, pressure and/or frictional movement are applied. Advantageously, pellets of NuPlastiQ or ESR can be used the same as petrochemical based pellets (any typical non-biodegradable plastic resin pellets) in standard plastic production processes. NuPlastiQ or ESR materials and products made therefrom may exhibit gas barrier characteristics. Products (e.g., films) made using such NuPlastiQ or ESR pellets exhibit oxygen gas barrier characteristics (e.g., see Examples of Applicant's previous filings, already incorporated by reference). NuPlastiQ or ESR materials may be non-toxic and edible, made using raw materials that are all edible. NuPlastiQ or ESR and products made therefrom may be water resistant, but water soluble. For example, NuPlastiQ or ESR may resist swelling under moist heated conditions to the point that pellets (e.g. with a size of 3-4 mm) thereof may not completely dissolve in boiling water within 5 minutes, but a pellet will dissolve in the mouth within about 10 minutes. NuPlastiQ or ESR may be stable, in that it may not exhibit any significant retrogradation, even if left in relatively high humidity conditions, which characteristic differs from many other thermoplastic starch materials. Of course, products made with NuPlastiQ or ESR may also exhibit such characteristics. If NuPlastiQ or ESR is stored in humid conditions, the excess absorbed water can simply be evaporated away, and once the water content is no more than about 1%, it can be used in forming a film or other article.

The NuPlastiQ or ESR material also does not typically undergo biodegradation under typical storage conditions, even in relatively humid conditions, as the other conditions typical of a landfill, compost or similar disposal environment containing the particular needed microorganisms are not present. Of course, where such conditions are present, not only does the NuPlastiQ or ESR biodegrade, but otherwise non-biodegradable plastic materials blended therewith surprisingly also biodegrade. Evidence of such surprising results is included in the Examples section, included herein.

NuPlastiQ or ESR can be cost competitive, being manufactured at a cost that is competitive with traditional polyethylene plastic resins. NuPlastiQ or ESR can be mixed with other polymers, including, but not limited to PE, PP, PET, polyester, polystyrene, acrylonitrile butadiene styrene (ABS), polyvinyl chloride, nylon, and others. While the above non-biodegradable polymers can be rendered biodegradable by blending with NuPlastiQ or ESR, it will be appreciated that NuPlastiQ or ESR can also be blended with polymers that already are biodegradable and/or compostable, such as polylactic acid (PLA), poly(butylene adipate-co-terephthalate) (PBAT), polybutylene succinate (PBS), polycaprolactone (PCL), polyhydroxyalkanoates (PHA), other so-called thermoplastic starches, as well as various others. PBS, PCL, and PHA are polyesters. EcoFLEX^{™} is another example of a plastic material with which the NuPlastiQ or ESR starch-based polymeric material may be blended. For example, the present methods are not limited to blending the starch-based polymeric material (e.g., NuPlastiQ or ESR) with only a non-biodegradable plastic material, as it will be appreciated that biodegradable plastics (other than NuPlastiQ or ESR) can also be incorporated into the blend, if desired.

By way of further explanation, PLA is compostable, meaning that it can degrade under elevated temperature conditions (i.e., composting conditions), but is technically not "biodegradable". Some of the above listed materials, such as PBS, PCL, and PHA may be both biodegradable and compostable. EcoFLEX^{™} is certified as compostable. FTC Green guidelines stipulate that a plastic cannot make an unqualified claim that it is "degradable" unless it will degrade within a "reasonably short period of time" (most recently defined as within 5 years) "after customary disposal".

In some embodiments, the NuPlastiQ or ESR could be provided in a masterbatch formulation that may include the starch-based polymeric material as described above, and an amount of one or more compatibilizers. The masterbatch may also include one or more non-biodegradable plastic materials. Such masterbatch formulation pellets could be mixed with pellets of the non-biodegradable plastic material at the time of processing. Any conceivable ratios may be used in mixing such different pellets, depending on the desired percentage of NuPlastiQ or ESR and/or compatibilizer and/or conventional non-biodegradable plastic material in the finished article.

NuPlastiQ or ESR includes very low water content. For example, although raw starch (e.g., used in forming ESR) may typically include about 13% water by weight, the finished NuPlastiQ or ESR pellets available from BiologiQ include less than about 1% water. NuPlastiQ or ESR materials are biodegradable, and as described herein, not only is the starch-based NuPlastiQ or ESR material biodegradable, but when blended with other polymers, such as non-biodegradable PE, PP, PET, polyester, polystyrene, ABS, polyvinyl chloride, nylon, and other non-biodegradable plastic materials, the blended material becomes substantially entirely biodegradable. Such results are quite surprising, and particularly advantageous. The Examples herein provide evidence of such surprising results. Typical thermoplastic starch materials do not claim to or exhibit such characteristics when blended with other plastic materials.

The NuPlastiQ or ESR material may exhibit some elasticity, although its elasticity may be less than many other polymers (e.g., particularly "green" sustainable polymers that mimic their petrochemical-based polymer cousins). Films and other articles may be formed from blends of NuPlastiQ or ESR and any desired other polymer(s), providing elasticity results exhibiting increased strength, at a given article thickness as compared to the other polymer, alone. While films are described and often used in the Examples herein, where strength is often of critical importance, it will be apparent that increased strength can also be provided in articles other than films (e.g., bottles, sheets, boxes, cups, plates, utensils, or other forms). Table 2 below shows elongation at break and elastic modulus values for various standard plastic ("SP") materials, various "environmentally-friendly" plastic materials, and NuPlastiQ or ESR, for comparison. By "environmentally friendly", the material may have one or more environmentally desirable characteristics, such as its being at least partially derived from a sustainable material, being compostable, and/or being biodegradable. The NuPlastiQ or ESR in Table 2 had a tensile strength of 40 MPa.

**Table 2**

| **MATERIAL** | **ENVIRONMENTALLY FRIENDLY OR STANDARD PLASTIC** | **ELONGATION AT BREAK** | **ELASTIC MODULUS** |
|---|---|---|---|
| EcoFlex C1200 | EP | 700% | 0.10 GPa |
| NuPlastiQ or ESR | EP | 100% | 1.5 GPa |
| HDPE | SP | 650% | 0.80 GPa |
| LDPE | SP | 550% | 0.40 GPa |
| PBS | EP | 450% | 0.50 GPa |
| PCL | EP | 600% | 0.20 GPa |
| PHA | EP | 300% | 3.40 GPa |
| PLA | EP | 150% | 3.50 GPa |
| PET | SP | 200% | 2.50 GPa |
| PP | SP | 500% | 1.75 GPa |
| ABS | SP | 25% | 2.00 GPa |
| Nylon | SP | 100% | 3.00 GPa |

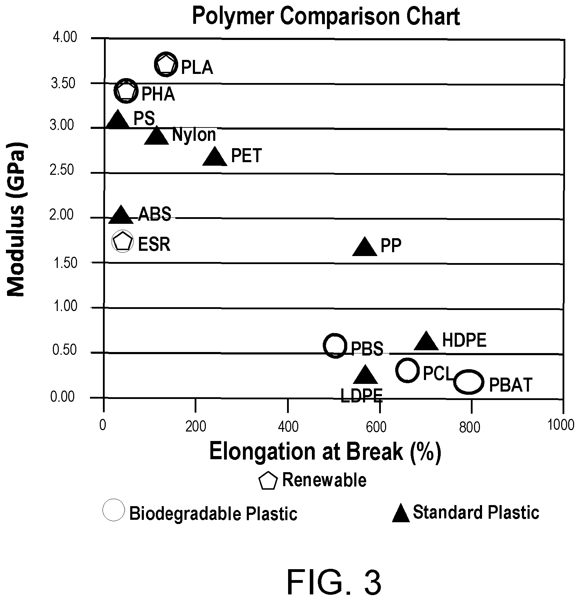

FIG. 3 shows similar data as in Table 2, in chart form. Of course, some of the products listed in the table and shown in FIG. 3 that are listed as standard plastics have "green" cousins that can be derived from sustainable sources, such as, but not limited to, BioPET, "green" PP, "green" PE, and bioPBAT. PLA is compostable, meaning that it can degrade under elevated temperature conditions (i.e., composting conditions), but is technically not "biodegradable". The other exemplary materials listed above such as EcoFlex, PBS, PCL, PHA may be both biodegradable and compostable. FTC Green guidelines stipulate that a plastic cannot make an unqualified claim that it is "degradable" unless it will degrade within a "reasonably short period of time" (most recently defined as within 5 years) "after customary disposal".

The NuPlastiQ or ESR materials described as suitable for use herein as the starch-based polymeric material are substantially amorphous. For example, raw starch powder (e.g., such as is used in making NuPlastiQ or ESR and various other thermoplastic starch materials) has approximately a 50% crystalline structure. NuPlastiQ or ESR materials available from BiologiQ differ from many other commercially available thermoplastic starch (TPS) materials in crystallinity versus amorphous characteristics. For example, p. 62-63 of "Thermoplastic Starch Composites and Blends" a PhD thesis by Kris Frost (September 2010) states "[o]f particular interest in TPS is completeness of gelatinisation during processing, and any subsequent tendency toward retrogradation to form V-type amylose crystals". Frost further continues "[g]elatinisation involves loss of granular and crystalline structures by heating with water and often including other plasticizers or modifying polymers. Retrogradation is due to the re-coiling of amylose helical coils. Starch molecules disrupted during gelatinisation slowly re-coil into their native helical arrangements or new single helical conformations known as V type, causing TPS films to rapidly become brittle and lose optical clarity". Thus, conventional TPS tends to re-form a crystalline structure after the gelatinization process used to produce the TPS from raw starch. On the contrary, the NuPlastiQ or ESR material available from BiologiQ does not revert back to a mostly crystalline structure. In addition, it can maintain a stable, relatively high degree of optical clarity, so as to be useful in forming relatively optically clear films (e.g., particularly by sandwiching NuPlastiQ or ESR containing layers between polyethylene or other polyolefin layers).

In contrast to typical TPS materials, the NuPlastiQ or ESR materials that are suitable examples of starch-based polymeric materials for use in forming articles described in the present application have an amorphous microstructure, and physical characteristics as shown in Table 1. The difference in the molecular structure between conventional TPS and NuPlastiQ or ESR materials is evidenced by the NuPlastiQ or ESR materials as described herein being much less crystalline than conventional thermoplastic starch-based materials as shown by X-ray diffraction, shown in FIG. 4, comparing diffraction pattern results for NuPlastiQ or ESR material available from BiologiQ (sample 1) as compared to a blend of native raw corn starch and native raw potato starch, from which the NuPlastiQ or ESR in FIG. 4 was formed. The diffraction pattern of the NuPlastiQ or ESR as seen in FIG. 4 is much less crystalline (e.g., crystallinity of less than about 10%) than that of the native starch blend (crystallinity of about 50%). The difference in diffraction pattern evidences that a substantial chemical change has occurred in the material, due to processing from the native starches into NuPlastiQ or ESR. For example, while there is a prominent diffraction peak between 20-25° with the native starch, no such peak is exhibited in the NuPlastiQ or ESR. The native starch further shows a strong peak at about 45° (at an intensity of 0.5 to 0.6), which peak is greatly reduced in the NuPlastiQ or ESR (only of about 0.25 to 0.3). Across nearly the entire spectrum, the diffraction intensities are higher for the native starches than for the NuPlastiQ or ESR, with the exception of from about 18° to about 22°, as shown. The elevated diffraction intensity seen across a wide spectrum is indicative of greater crystallinity of the native starches as compared to the NuPlastiQ or ESR. Numerous other differences also exist, as shown.

The starch-based polymeric material used in making films according to the present disclosure has a crystallinity of less than about 20%, such as less than about 15%, less than about 10%, less than about 8%, less than about 6%, less than about 5%, or less than about 3%. Any suitable test mechanism for determining crystallinity may be used, e.g., including but not limited to FTIR analysis, X-ray diffraction methods, and symmetrical reflection and transmission techniques. Various suitable test methods will be apparent to those of skill in the art.

In addition to the differences in the microstructure of the finished NuPlastiQ or ESR as compared to the starting materials, films, bottles, sheets, disposable utensils, plates, cups, or other articles produced from a blend including the starch-based polymeric material are different from articles that are otherwise similar, but formed using conventional TPS and starch powder, or non-biodegradable plastic materials alone. For example, articles formed by blending the starch-based polymeric materials such as NuPlastiQ or ESR as described herein with a non-biodegradable plastic material do not have "sea-island" features that are common when blending conventional TPS materials with polymeric materials such as polyethylene. Properties of the different films can be seen by comparing the physical properties of films as shown in Table 11 of Example 5 of Applicant's U.S. Patent Application 15/481,806. In particular, this table compares the physical properties of films made by blending starch-based polymeric materials as contemplated herein with non-biodegradable polyethylene versus a conventional TPS blended with PE (Cardia BL-F). In addition to the differences in properties seen in Table 11 of Example 5 of Applicant's U.S. Patent Application 15/481,806, the film based on conventional TPS materials such as Cardia BL-F, blended with PE is not biodegradable, and not compostable.

As described herein, blending of the starch-based polymeric materials as described herein with a non-biodegradable plastic material results in not just the starch-based material being biodegradable, but the non-biodegradable plastic material actually becomes biodegradable (even where the non-biodegradable plastic material alone is not biodegradable). Such results do not occur when blending with typical TPS materials. Such differences in biodegradability clearly illustrate that there are significant structural and/or chemical differences in the resulting films and other articles, as the entire composite structure (i.e., the film or other structure) is now capable of being biodegraded, as shown by the various examples below.

Without being bound to any particular theory, it is believed that the starch-based polymeric resins may reduce the crystallinity of the blended products, interrupting the crystallinity and/or hygroscopic barrier characteristics of the polyethylene or other non-biodegradable plastic material in a way that allows water and bacteria to degrade the arrangements and linkages of otherwise non-biodegradable plastic molecules of the blend along with the starch-based polymeric resin material. In other words, the long polymer chains of polyethylene or other non-biodegradable plastic material are more easily broken by chemical and mechanical forces that exist in environments that are rich in bacteria and microorganisms, when blended with starch-based polymeric materials as contemplated herein. Subsequently, the microorganisms that exist naturally in a disposal environment (e.g., in a landfill) can consume the remaining smaller molecules so that they are converted back into natural components (such as CO₂, CH₄, and H₂O).

For example, truly biodegradable plastics decompose into natural elements or compounds such as carbon dioxide, methane, water, inorganic compounds, or biomass via microbial assimilation (e.g., the enzymatic action of microorganisms on the plastic molecules). Biodegradation of plastics can be enabled by first breaking down the polymer chains via either chemical or mechanical action but may only be fully accomplished through decomposition of the molecules by microbial assimilation.

Plastics made from petrochemical feedstocks or derived from plant sources begin life as monomers (e.g., single small molecules that can react chemically with other small molecules). When monomers are joined together, they become polymers ("many parts"), known as plastics. Before being joined together, many monomers are readily biodegradable, although after being linked together through polymerization, the molecules become so large and joined in such arrangements and linkages that microbial assimilation by microorganisms is not practical within any reasonable time frame.

Polymers are formed with both crystalline (regularly packed) structures and amorphous (randomly arranged) structures. Many polymers contain a high degree of crystallinity with some amorphous regions randomly arranged and entangled throughout the polymeric structure.

NuPlastiQ or ESR materials available from BiologiQ are formed from starting starch materials which are highly crystalline, but in which the finished NuPlastiQ or ESR plastic resin material exhibits low crystallinity (substantially amorphous). Such starch-based polymer materials are used as a starting material in the production of articles as described herein. NuPlastiQ or ESR is, therefore, plastic that is made from starch. Because of its natural, starch-based origin and carefully controlled linkage types, the molecules (size and links) of plastic made with NuPlastiQ or ESR are highly susceptible to biodegradation by enzymatic reactions caused from the introduction of humidity (water) and bacteria or other microorganisms, as evidenced by the experimental test results included herein.

Polyolefins such as rigid forms of polyethylene and polypropylene have a high degree of crystallinity and are made by converting monomer molecules (whether petroleum derived or derived from ethanol or other small building block molecules derived from plant sources) into long chain polymers. The bonds created when connecting the monomers to form long polymer chains are strong and difficult to break. Films and other articles formed from such polymeric materials are not biodegradable. Even if a given article were formed from a blend of conventional non-biodegradable plastic material and conventional TPS, it would not normally suddenly acquire biodegradability characteristics (other than the starch portion of the blend which may sometimes biodegrade).

Applicant has developed a process for lending biodegradability to an otherwise non-biodegradable plastic material by blending such plastic material with the starch-based polymeric materials having low crystallinity (e.g., NuPlastiQ or ESR). Typically the non-biodegradable plastic material has higher crystallinity (e.g., particularly in the case of PE or PP).

In addition to biodegradability, the resulting blend may additionally or alternatively have a higher elastic modulus (stiffness, or strength) than polyethylene or other non-biodegradable plastic material, and can be used to make plastic films or other articles that are stronger than the same articles made with pure polyethylene or other pure non-biodegradable plastic material. Such increased strength characteristics are described in U.S. Patent Application No. 15/481,806.

Returning to FIG. 1, at 106, the process 100 includes mixing the one or more other polymeric materials and the one or more starch-based polymeric materials to produce a mixture of materials. In some cases, the mixing of the one or more other polymeric materials and the one or more starch-based materials can be performed using one or more mixing devices. In a particular implementation, a mechanical mixing device can be used to mix the one or more other polymeric materials and the one or more starch-based polymeric materials. In an implementation, at least a portion of the components of the mixture of the materials can be combined in an apparatus, such as an extruder, an injection molding machine, or the like. In other implementations, at least a portion of the components of the mixture of the materials can be combined before being fed into the apparatus.

The one or more starch-based polymeric materials can be present in the mixture of materials across a wide variety of ranges depending on desired characteristics. In an embodiment, such inclusion may be sufficient to lend biodegradability to an otherwise non-biodegradable "other" polymeric material included in the blend, to increase strength to a desired degree, to provide a given level of "sustainable" content, or for another purpose. The starch-based polymeric material is included in an amount of from 1% to 40% by weight of the mixture of materials and may be included in an amount of at least at least 1%, at least 2%, at least 3%, at least 4%, at least 5%, at least 10%, at least 15%, at least 20%, at least 25%, at least 30%, at least 35%, from 20% to 40%, from 10% to 40%, from 20% to 30%, by weight of the mixture of materials. More than one starch-based polymeric material, and/or more than one other plastic material may be included in the blend, if desired.

The other polymeric material can be present in the mixture of materials in an amount of at least 0.5%, at least 1%, at least 2%, at least 3%, at least 4%, at least 5%, at least 10%, at least 15%, at least 20%, at least 25%, at least 30%, at least 35%, at least 40%, at least 45%, at least 50%, no greater than 99%, no greater than 95%, no greater than 90%, no greater than 85%, no greater than 80%, no greater than 75%, no greater than 70%, no greater than 65%, or no greater than 60%, from 2% to 98%, from 50% to 90%, from 65% to 75%, from 20% to 50%, or from 40% to 60% by weight of the mixture of materials.

A compatibilizer may be present in the mixture of materials. The compatibilizer can be mixed with the other polymeric material, the starch-based polymeric material, mixed with both, or provided separately. Often the compatibilizer may be provided with at least one of the polymeric materials, e.g., included in a masterbatch formulation. The compatibilizer can be a modified polyolefin or other modified plastic, such as a maleic anhydride grafted polypropylene, a maleic anhydride grafted polyethylene, a maleic anhydride grafted polybutene, or a combination thereof. The compatibilizer can also include an acrylate based co-polymer. For example, the compatibilizer can include an ethylene methyl acrylate co-polymer, an ethylene butyl-acrylate co-polymer, or an ethylene ethyl acrylate co-polymer. Additionally, the compatibilizer can include a poly(vinyl acetate) based compatibilizer. In an embodiment, the compatibilizer may be a grafted version of the other polymeric material (e.g., maleic anhydride grafted polyethylene where the other polymeric material is polyethylene) or a copolymer (e.g., a block copolymer) where one of the blocks is of the same monomer as the other polymeric material (e.g., a styrene copolymer where the other polymeric material is polystyrene or ABS).

The mixture of materials may include at least 0.5%, at least 1%, at least 2%, at least 3%, at least 4%, at least 5%, no greater than 50%, no greater than 45%, no greater than 40%, no greater than 35%, no greater than 30%, no greater than 25%, no greater than 20%, no greater than 15%, no greater than 10%, no greater than 9%, no greater than 8%, no greater than 7%, no greater than 6%, from 0.5% by weight to 12%, from 2% to 7%, or from 4% to 6% by weight of a compatibilizer.

Although certainly not required, and in at least some embodiments the inclusion of such would be best avoided, it is within the scope of the present invention to include any of a variety of UV and OXO degradable additives, such as PDQ-M, PDQ-H, BDA, and OxoTerra^{™} from Willow Ridge Plastics, OX1014 from LifeLine, or organic additives such as Restore^{®} by Enso, EcoPure^{®} by Bio-Tec Environmental, ECM Masterbatch Pellets 1M by ECM Biofilms, or Biodegradable 201 and/or Biodegradable 302 BioSphere^{®}. Other additives, for example, for increased strength (e.g., Biomax^{®} Strong from Dupont), or otherwise may be included.

One or more additives can be included in the mixture of materials in an amount of at least 0.5%, at least 1%, at least 1.5%, at least 2%, at least 2.5%, at least 3%, at least 4%, of no greater than 10%, no greater than 9%, no greater than 8%, no greater than 7%, no greater than 6%, no greater than 5%, from 0.2% to 12%, from 1% to 10%, from 0.5% to 4%., or from 2% by weight to 6% by weight of the mixture.

While principally described in the context of a mixture of thermoplastic materials that can be melted together, to form a desired blend, in some embodiments, it may be possible to blend the starch-based polymeric material with another polymeric material that is not thermoplastic (e.g., that is thermoset, e.g., such as for silicone). For example, the resin components that are precursors of such non-thermoplastic "other" polymeric materials may be blended with the starch-based polymeric material, where polymerization or other formation of the non-thermoplastic "other" polymeric material may occur in the presence of the starch-based polymeric material, resulting in a finished article that is a blend of the starch-based polymeric material and a thermoset or other non-thermoplastic plastic material. The starch-based polymeric material may lend any of the same benefits to such a non-thermoplastic material as described herein (e.g., increased sustainability, biodegradability, increased strength, etc.) upon blending of the two together.

Referring to FIG. 1, at 108, particularly where the materials are thermoplastic, the process 100 may include heating the mixture of materials. In an implementation, the mixture of materials can be heated to a temperature of at least 100°C, at least 110°C, at least 115°C, at least 120°C, at least 125 °C, at least 130°C, at least 135°C, at least 140°C, no greater than 200°C, no greater than 190°C, no greater than 180°C, no greater than 175°C, no greater than 170°C, no greater than 165°C, no greater than 160°C, no greater than 155°C, no greater than 150°C, from 95°C to 205°C, from 120°C to 180°C, or from 125°C to 165°C.

The mixture of materials including the other polymeric material and the starch-based polymeric material can be heated in one or more chambers of an extruder. In some cases, one or more chambers of the extruder can be heated at different temperatures. The speed of one or more screws of the extruder can be any desired rate.

At 110, an article is produced using the mixture of materials. In some cases, the article can include a film. In other cases, the article can be formed from a film. In other embodiments, the article can have a shape based on a design, such as a mold (e.g., injection molded). Any conceivable article formed of plastic may be formed from the mixture, e.g., including but not limited to films, bags, bottles, caps, lids, sheets, boxes, plates, cups, utensils, and the like. Where the article is a film, the film can be formed using a die by injecting a gas into the heated mixture of material to form the film (i.e., blowing the film). Films can be sealed and/or otherwise modified to be in the form of a bag or other article.

Where the article is a film, the film can be comprised of a single layer or multiple layers. The film or any individual layers can have a thickness of at least 0.001 mm, at least 0.002 mm, at least 0.004 mm, at least 0.01 mm, at least 0.02 mm, at least 0.03 mm, at least 0.05 mm, at least 0.07 mm, at least 0.10 mm, no greater than 2 mm, no greater than 1 mm, no greater than 0.5 mm, no greater than 0.1 mm, from about 0.05 mm to about 0.5 mm, or from 0.02 mm to 0.05 mm. Some specific examples may include films of less than 0.005 mm, such as from 0.002 mm to 0.004 mm, or from 0.0025 mm (0.1 mil) to 0.25 mm (10 mils). While there may be some overlap in thickness values for film and sheet articles, it will be appreciated that sheet materials of greater thickness than such film values may of course be provided, produced by any desired plastic manufacturing process.

The ability to blow very thin films of 0.0025 mm (0.1 mil) has been demonstrated by Applicant using blends as described herein, which very thin films exhibit significant strength (e.g., at least 40 g in a dart drop impact test, for a 0.0025 mm (0.1 mil) film, such as 40 g to 110 g, or 40 g to 100 g dart strength for such very thin films). The ability to even blow such very thin films is believed to possibly be unique to Applicant, using blends and other parameters (e.g., blow up ratios, die gaps, etc.) as described herein.

Films or other articles can have strength characteristics that are characterized through testing, such as a dart drop impact test (ASTM D-1709), tensile strength at break test (ASTM D-882), tensile elongation at break test (ASTM D-882), a secant modulus test (ASTM D-882), and/or an Elmendorf Tear test (ASTM D-1922). Films can have a dart drop impact test value of at least 150 g, at least 175 g, at least 200 g, at least 225 g, at least 250 g, at least 275 g, at least 300 g, no greater than 400 g, no greater than 375 g, no greater than 350 g, or no greater than 325 g, from 140 g to 425 g, from 200 g to 400 g, from 250 g to 350 g, from 265 g to 330 g. In an implementation, such values may be for whatever the thickness of the film is. In another implementation, such values may for a 0.025 mm (1 mil) thickness film formed from the mixture of materials.

The article can have a tensile strength at break test value in the machine direction of at least 24131.7 kPa (3.5 kpsi), at least 25510.6 kPa (3.7 kpsi), at least 26889.6 kPa (3.9 kpsi), at least 28268.5 kPa (4.1 kpsi), at least 29647.5 kPa (4.3 kpsi), or at least 31026.4 kPa (4.5 kpsi), no greater than 37921.2 kPa (5.5 kpsi), no greater than 36542.2 kPa (5.3 kpsi), no greater than 35163.3 kPa (5.1 kpsi), no greater than 33784.3 kPa (4.9 kpsi), or no greater than 32405.4 kPa (4.7 kpsi), from 34121.7 kPa (3.5 kpsi) to 37921.2 kPa (5.5 kpsi), or from 28268.5 kPa (4.1 kpsi) to 33784.3 kPa (4.9 kpsi).

The article can have a tensile strength at break test value in the transverse direction of at least 22063.2 kPa (3.2 kpsi), at least 23442.2 kPa (3.4 kpsi), at least 24821.1 kPa (3.6 kpsi), at least 26200.1 kPa (3.8 kpsi), at least 27579.0 kPa (4.0 kpsi), at least 28958 kPa (4.2 kpsi), no greater than 39300.1 kPa (5.7 kpsi), no greater than (37921.2 kPa (5.5 kpsi), no greater than 36542.2 kPa (5.3 kpsi), no greater than 35163.3 kPa (5.1 kpsi), no greater than 33784.3 kPa (4.9 kpsi), no greater than 32405.4 kPa (4.7 kpsi), no greater than 31026.4 kPa (4.5 kpsi), from 22063.2 kPa (3.2 kpsi) to 39300.1 kPa (5.7 kpsi), or from 24821.1 kPa (3.6 kpsi) to 34473.8 kPa (5.0 kpsi).

The article can have a tensile elongation at break test value in the machine direction of at least 550%, at least 560%, at least 570%, at least 580%, at least 590%, at least 600%, at least 610%, at least 620%, no greater than 725%, no greater than 710%, no greater than 700%, no greater than 680%, no greater than 665%, no greater than 650%, no greater than 635%, from 550% to 750%, or from 600% to 660%.

The article can have a tensile elongation at break test value in the transverse direction of at least 575%, at least 590%, at least 600%, at least 615%, at least 630%, or at least 645%, no greater than 770%, no greater than 755%, no greater than 740%, no greater than 725%, no greater than 710%, no greater than 695%, no greater than 680%, from 575% to 775%, or from 625% to 700%.

Where applicable the article can have an Elmendorf tear force test value in the machine direction of at least 11023.6 g/mm (280 g/mil), at least 11811 g/mm (300 g/mil), at least 12598.4 g/mm (320 g/mil), at least 13385.8 g/mm (340 g/mil), or at least 14173.2 g/mm (360 g/mil), no greater than 17716.5 g/mm (450 g/mil), no greater than 16929.1 g/mm (430 g/mil), no greater than 16141.7 g/mm (410 g/mil), no greater than 15354.3 g/mm (390 g/mil), or no greater than 14566.9 g/mm (370 g/mil), from 10826.8 g/mm (275 g/mil) to 18700.8 g/mm (475 g/mil), or from 12795.3 g/mm (325 g/mil) to 16141.7 g/mm (410 g/mil).

Where applicable the article can have an Elmendorf tear force test value in the transverse direction of at least 18700.8 g/mm (475 g/mil), at least 19291.3 g/mm (490 g/mil), at least 19685 g/mm (500 g/mil), at least 20669.3 g/mm (525 g/mil), at least 21259.8 g/mm (540 g/mil), or at least 21653.5 g/mm (550 g/mil), no greater than 27559.1 g/mm (700 g/mil), no greater than 26771.7 g/mm (680 g/mil), no greater than 25590.6 g/mm (650 g/mil), no greater than 24606.3 g/mm (625 g/mil), no greater than 23622 g/mm (600 g/mil), no greater than 22834.6 g/mm (580 g/mil), or no greater than 22440.9 g/mm (570 g/mil), from 18700.8 g/mm (475 g/mil) to 28543.3 g/mm (725 g/mil), or from 19291.3 g/mm (490 g/mil) to 25196.9 g/mm (640 g/mil).

Where applicable the article can have a secant modulus of elasticity test value in the machine direction of at least 137895 kPa (20 kpsi), at least 151685 kPa (22 kpsi), at least 165474 kPa (24 kpsi), at least 179264 kPa (26 kpsi), at least 193053 kPa (28 kpsi), or at least 206843 kPa (30 kpsi), no greater than 275790 kPa (40 kpsi), no greater than 262001 kPa (38 kpsi), no greater than 248211 kPa (36 kpsi), no greater than 234422 kPa (34 kpsi), or no greater than 220632 kPa (32 kpsi), from 137895 kPa (20 kpsi) to 275790 kPa (40 kpsi), or from 172369 kPa (25 kpsi) to 241317 kPa (35 kpsi).

Where applicable the article can have a secant modulus of elasticity test value in the transverse direction of at least 137895 kPa (20 kpsi), at least 151685 kPa (22 kpsi), at least 165474 kPa (24 kpsi), at least 179264 kPa (26 kpsi), at least 193053 kPa (28 kpsi), or at least 206843 kPa (30 kpsi), no greater than 275790 kPa (40 kpsi), no greater than 262001 kPa (38 kpsi), no greater than 248211 kPa (36 kpsi), no greater than 234422 kPa (34 kpsi), or no greater than 220632 kPa (32 kpsi), from 137895 kPa (20 kpsi) to 275790 kPa (40 kpsi), or from 172369 kPa (25 kpsi) to 241317 kPa (35 kpsi).

In some cases, articles including a starch-based polymeric material formed from a mixture of two or more starches have values of strength properties that are greater than articles including a starch-based polymeric material formed from a single starch. For example, an article including a starch-based polymeric material formed from a mixture of two or more starches can have a dart drop impact test value (in grams or g/mil of thickness) that is at least about 5% greater, or 10% greater than an article where the starch-based polymeric material is formed from a single starch, at least about 25% greater, at least about 50% greater, at least about 75% greater, from 10% greater to 150% greater or from 60% greater to 120% greater than the same article but including a starch-based polymeric material formed from a single starch. Details of such increased strength is found within the Examples herein, and in U.S. Patent Application Nos. 14/853,725 and 15/481,806.

FIGs. 1A, 1B, and 1C further illustrate particular examples of processes according to the present disclosure. These Figures are thus generally encompassed by the more generic steps of FIG. 1, and the description provided therewith, which applies generally. For example, FIG. 1A shows similar steps 102, 104, 106, and 108, but at 110' the produced article is in particular a blown film, and the film blowing apparatus is operated so that the blow-up ratio is at least 2.0, and/or the die gap is no more than 500 microns. In other words, FIG. 1A illustrates an exemplary process 100' that may be used to increase strength of a blown plastic film, by ensuring that a renewable starch-based polymeric material is included in a blend from which the plastic film is blown, and by specifically selecting a high blow up ratio and/or narrow die gap. At 102, the process 100 can include providing one or more "other" polymeric materials, e.g., including any plastic resins that can be blown into film, such as polyethylene, polypropylene, other polyolefins, polyethylene terephalate, polyester, nylon, polystyrene, ABS, polyvinyl chloride, or the like. The "other" polymeric material may be a petrochemical-based polymeric material. It may also be a "green" version of such petrochemical-based polymeric materials (e.g., such as "green" polyethylene, available from Braskeem, or the like). It will be apparent that a wide variety of polymers may be suitable for use as the "other" polymeric material.

At 104, the process 100 can include providing the one or more starch-based polymeric materials, e.g., with may be specifically selected for inclusion in the blend for its recognized ability to increase strength when blown at a high blow up ratio and/or narrow die gap. The renewable starch-based polymeric material is substantially amorphous, having a crystallinity of no more than 20%. Various other characteristics relating to elastic modulus (i.e., Young's modulus), glass transition temperature, heat deflection temperature, vicat softening temperature or other characteristics may additionally or alternatively be present, as described relative to the exemplary NuPlastiQ or ESR materials available from BiologiQ, as described herein. At 106 the materials may be mixed together at 106, forming a blend of the materials. At 108, they may be heated (e.g., melted in the case of thermoplastic materials) in preparation for blowing a film therefrom. At 110', a plastic film is blown using a film blowing apparatus using the mixture of materials. During such film blowing, the blow up ratio employed may be at least 2.0. As described herein, Applicant has discovered that the combination of including the starch-based polymeric material in the blend, and using a blow up ratio of 2.0 or greater allows significant increases in strength for the film, particularly where also accompanied by a narrow die gap.

Multilayer films formed from a blend of Cardia BL-F and PE are described in WO 2014/0190395 to Leufgens, which are significantly weaker than the presently described films, because of the different TPS material used, as well as selection of the particular blow up ratio and/or die gap characteristics selected. For example, the film blown in Leufgens is 80 microns thick (i.e., more than 0.076 mm (3 mils)), and exhibits strength that is actually less than that of a 100% PE film. In contrast, the particular selections described herein allow strength at any given thickness to actually increase as compared to a 100% "other polymeric material" (e.g., PE) control. Furthermore, the present methods allow production of films having a desired level of strength at far lower thicknesses. Such ability to achieve a desired level of strength at significantly less thickness also reduces the amount of material being used in the film layer, leading to further cost savings, and greater sustainability gains.

As described herein, blending of the particular starch-based polymeric materials as described herein with another polymeric material and then blowing a plastic film with a film blowing apparatus using the mixture of materials, at a blow up ratio of at least 2.0 and/or with a narrow die gap (e.g., no more than 500 microns) has been found by the Applicant to provide thin films (e.g., less than 0.05 mm (2 mils), e.g., 0.0025 mm (0.1 mils) to 0.038 mm (1.5 mils)) that actually exhibit greater strength than an otherwise similar film, blown with just the first polymeric material (e.g., PE).

Without being bound to any particular theory, it is believed that the particular renewable starch-based polymeric resins which are substantially amorphous, when blown at such high blow up ratios and/or narrow die gaps facilitate a desirable alignment, orientation, and/or stretching of the different polymer molecules of the blend, in a way that increases the strength of the resulting blended plastic film.

For example, polymers are formed with both crystalline (regularly packed) structures and amorphous (randomly arranged) structures. Many polymers (such as polyethylene) contain a high degree of crystallinity, although they may include some amorphous regions randomly arranged and entangled throughout the polymeric structure. The particular renewable starch-based polymeric materials employed are not highly crystalline, but substantially amorphous. While not being bound to any particular theory, it is believed that the combination of the crystalline first polymeric material and the amorphous renewable starch-based polymeric materials undergo orientation, alignment, and stretching of the components, in a way that allows the components of the blend to be homogeneously blended together, but orientationally aligned and stretched in a way that results in increased strength. Such increases may be observed in both the machine direction (MD) and the transverse direction (TD), such that the observed phenomenon is not simply trading off strength in one direction with that in another direction. Such is evident in dart drop impact data, which accounts for strength in both directions.

Such increased strength through the selection of the particular amorphous starch-based material, and selection of the high blow up ratios, e.g., and/or use of a narrow die gap advantageously provides increased strength, within a thin film, often thinner than achievable with other TPS containing blends, such as Cardia BL-F. In some cases, the films can even be blown as thin as, or even thinner than is possible when blowing the first polymeric material alone, as described herein. For example, Applicant has observed an ability to blow films from a blend of polyethylene and the renewable starch-based polymeric material that are as thin as, or even thinner than the thinnest films that can be blown with polyethylene alone (e.g., the ability to blow 0.0025 mm (0.1 mil) films).

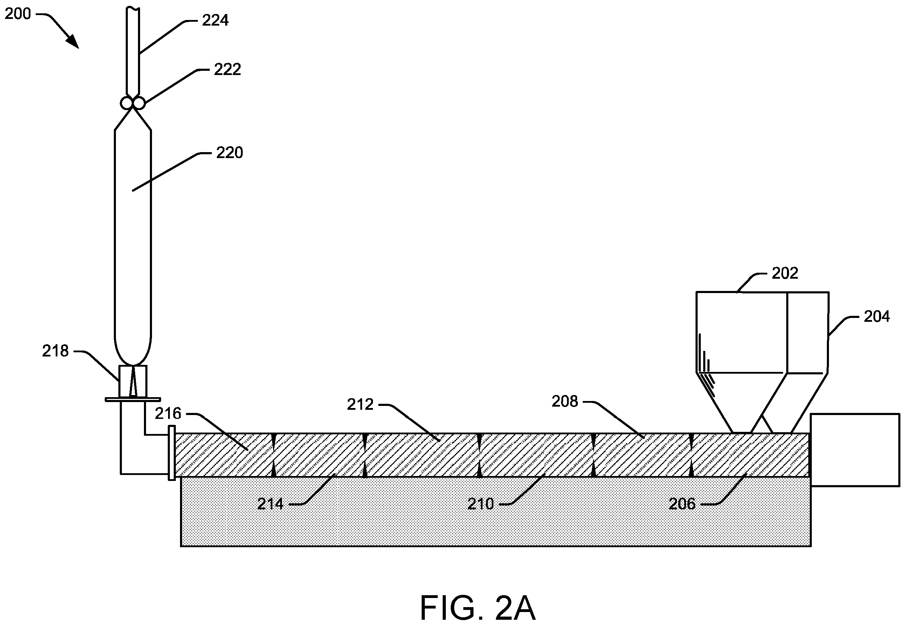

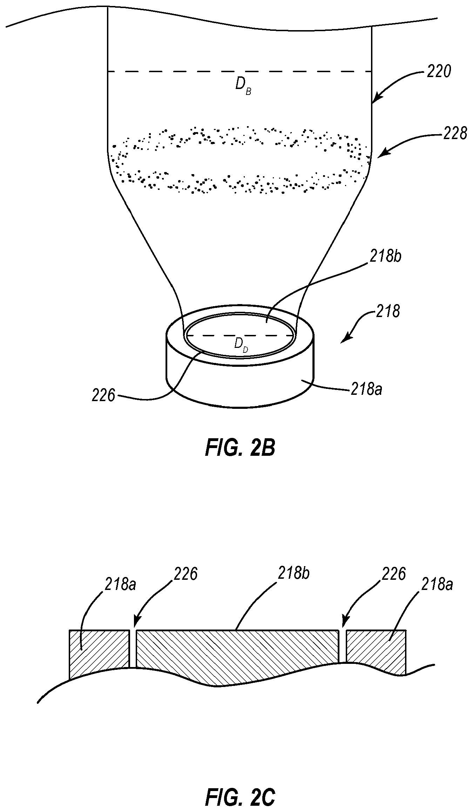

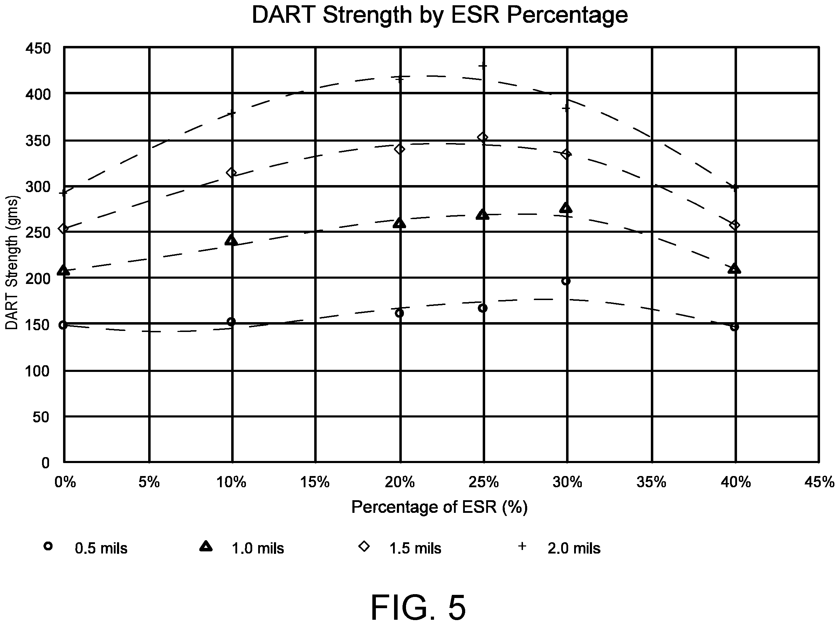

As described herein, articles including a starch-based polymeric material having low crystallinity and/or other characteristics as described herein, and another polymeric material, formed at the described high blow up ratios and/or narrow die gaps can have values of strength properties that are greater than articles formed from the "other" polymeric material alone. Such an increase in strength is advantageous and surprising, e.g., as compared to the state of the art. For example, while Leufgens describes films blown from a blend of a starch-based polymeric material (Cardia BL-F) and polyethylene, the resulting films exhibit lower tensile strength (FIG. 2 of Leufgens), and lower dart drop impact strength (FIG. 5 of Leufgens) as compared to an otherwise similar film formed from the polyethylene alone. This is so, even when the blend of Cardia BL-F and polyethylene are blown at a blow up ratio of 3:1. Such is evidence that the increase in strength may not occur with just any renewable starch-based polymeric material, at least at the particular conditions used in Leufgens (which also included a relatively wide die gap of 1.6 to 1.8 mm). As the examples show, increased strength does occur when using the present renewable starch-based polymeric materials having low crystallinity and/or the other specific characteristics associated with NuPlastiQ or ESR.

Increases in strength (e.g., whether tensile strength, dart drop impact strength, or other strength measurements) may be at least about 1%, at least about 2%, at least about 3%, at least about 5%, at least about 10%, at least about 15%, at least about 20%, from 1% to 50%, from 1% to 40%, or from 10% to 40% as compared to an otherwise identical article, but which is formed from the "other" polymeric material alone (i.e., no renewable starch-based polymeric material or compatibilizer).

FIGs 1B and 1C illustrate particular methods for countering a characteristic odor provided by inclusion of the starch-based polymeric material in the blend. As will be apparent to those of skill in the art, any of the methods described herein can be used together (e.g., blowing a film at high blow up ratio and/or narrow die gap while also including an odor-reducing agent). FIG. 1B illustrates an exemplary process 100" according to the present invention for producing an article that includes a starch-based polymeric material an organic odor-reducing agent, and a polymeric resin. At 102, the process 100 can include providing one or more "other" polymeric resins. Such resins may be any of a vast number traditionally used in plastics manufacture, as described herein. At 103 and 104 respectively, the process 100 includes providing an organic odor-reducing agent and the starch-based polymeric material.

In an embodiment, the odor-reducing agent could be included with the starch-based polymeric material (e.g., included in a masterbatch thereof). In other embodiments, the odor-reducing agent could be added through another pathway, e.g., with the polymeric resin, separate from both the polymeric resin and the starch-based polymer, etc. It will be apparent that various pathways for such addition are contemplated and possible. The odor-reducing agent is specifically selected for inclusion in the blend for its ability to counter-act an odor otherwise lent to the finished product by the starch-based polymeric material. For example, the starch based polymeric material may otherwise lend a slight burned starch odor (e.g., slightly burned starch odor, a popcorn or caramel corn-like odor) that occurs during heat processing of the blend (e.g., during injection molding, blow molding, film blowing, or the like), where the mixture of components at 102, 103, and 104 are melted together, and formed while in a heated condition.

The odor-reducing agent at 103 can be in any such desired form (e.g., pellets, powders, nurdles, slurry and/or liquid). In an embodiment, the odor-reducing agent may initially comprise a freeze dried powder which may be mixed into a masterbatch of the starch-based polymeric material during manufacture, or after manufacture of the starch-based polymeric material. For example, where the starch-based polymeric material is formed from a mixture of starch powder(s), glycerin, and water, the odor-reducing agent (e.g., as a freeze dried powder) could simply be added to the mixture with the starch powder(s), or to the water, or plasticizer (e.g., glycerin), and mixed therewith. The starch-based polymeric material could then be manufactured by the same process by which it is normally produced, allowing the odor-reducing agent to become incorporated into the starch-based polymeric material as a dispersed component therein (e.g., homogeneously dispersed therein).

In another embodiment, the powdered or other odor-reducing agent could be simply mixed in with the starch-based polymer, as it is melted and prepared for combination with other components (e.g., compatibilizer) being included in the masterbatch. It will be apparent to those of skill in the art that numerous possibilities exist for adding the odor-reducing agent to any of the components that go into forming a plastic article from a blend of a starch-based polymeric material and another polymeric resin. Various such alternative pathways for incorporation of the organic odor-reducing agent may also be suitable for use.

No matter the pathway selected for introduction of the odor-reducing agent into the blend, the blend of components at 102, 103, and 104 may be formed through any conceivable process, such as those described above, and elsewhere herein.

The odor-reducing agent may be organic. Those of skill in the chemical arts will appreciate that organic compounds are carbon based, but exclude simple carbon compounds such as carbides, carbonates, oxides of carbon (e.g., CO and CO₂), and cyanides. In an embodiment, the organic odor-reducing agent may include a benzyl group, being an aromatic compound. Various aromatic derivatives of benzene, such as benzaldehydes and/or benzyl ketones may be suitable for use. In an embodiment, the organic odor-reducing agent may be a compound including only carbon, oxygen, and hydrogen atoms (e.g., no heteroatoms). In other embodiments, compounds including one or more heteroatoms may prove suitable for use. In an embodiment proven to be particularly effective, the odor-reducing agent comprises a benzaldehyde compound, such as 4-hydroxy-3-methoxybenzaldehyde. Such an aromatic compound is also known as vanillin, having the chemical structure shown below.

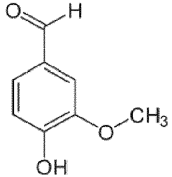

A very small fraction of the organic odor-reducing agent has been found to be sufficient to counteract the odor associated with the starch-based polymeric material. In addition to the fact that so little odor-reducing agent is required, it is also surprising that problems associated with addition of an organic component (the starch-based polymeric material) could be solved by addition of even more organic component(s). For example, one of skill in the art might expect such inclusion of additional organic components, particularly one having an aromatic chemical structure, to add to the odor released by the blend upon heat processing, rather than reducing or substantially eliminating such odors.

In an embodiment, no inorganic or other odor-reducing agents are included within the composition. For example, in an embodiment, no activated carbon, zeolite, or other components known to include active sites capable of binding odorous volatile molecules are included within the composition. For example, the inclusion of such odor-reducing agents that operate on a mechanism that relies on binding at active sites might somehow inhibit the ability of the benzaldehyde or other organic odor-reducing agent to perform its intended function (e.g., such active sites may merely serve to bind the benzaldehyde or other organic odor-reducing agent).

The odor-reducing agent may comprise no more than 1%, no more than 0.5%, no more than 0.25%, no more than 0.1%, no more than 0.05%, no more than 0.01%, no more than 1000 ppm, no more than 500 ppm, no more than 250 ppm, no more than 100 ppm, no more than 50 ppm, or no more than 20 ppm, of either the blended plastic material, or a starch-based polymeric material that includes the odor-reducing agent provided therein (e.g., as a masterbatch, for blending with another polymeric resin). Upon blending such a starch-based polymeric material with another polymeric resin, the concentration of the odor-reducing agent may of course be further diluted. For example, the concentration of such odor-reducing agent in the plastic blended article may be no more than 15 ppm, no more than 10 ppm, no more than 5 ppm, or even 1 ppm. Such tiny fractions have surprisingly been found by Applicant to be effective in counteracting and substantially removing the odor characteristic of a plastic including a starch-based polymeric material.

In addition to vanillin, other extracts from various fruits and/or vegetables may also be suitable for use as organic odor-reducing agents. Non-limiting possible examples include freeze dried extracts from vanilla, strawberry, blueberry, banana, apple, peach, pear, kiwi, mango, passionfruit, or raspberry. Combinations may also be suitable for use.

As noted above, in an embodiment, the odor-reducing agent can be added to the water and/or glycerin (e.g., dissolved or dispersed therein) used to form the starch-based polymeric material, which may be particularly beneficial in ensuring homogenous mixing of the very small fraction of the odor-reducing agent throughout the finished starch-based polymeric material. For example, while a powdered odor-reducing agent could be added to the other powdered materials (e.g., starch(s)) that go into making the starch-based polymeric material, because the amount of addition of the odor-reducing agent is so small (e.g., 20 ppm in the masterbatch), it may be easier to ensure homogenous distribution of the odor-reducing agent by mixing it with the liquid component(s), rather than in with the solid powder(s).

While addition of the odor-reducing agent to the starch-based polymeric material alters the odor characteristics by substantially removing any tendency of a blend of the starch-based polymeric material and another thermoplastic polymeric resin from exhibiting the otherwise characteristic caramel corn or popcorn type odor, such inclusion does not substantially alter any of the physical or other properties of the NuPlastiQ or ESR material, as described herein. As noted, the odor-reducing agent may be present in the starch-based polymeric NuPlastiQ or "ESR" material at a range of no more than 1000 ppm, 500 ppm, 250 pp, 200 ppm, 100 ppm, 50 ppm, 40 ppm, 30 ppm, 25 ppm, 20 ppm, from 5 ppm to 50 ppm, from 10 ppm to 50 ppm, or from 15 ppm to 25 ppm. Applicant has found a level of 20 ppm in the NuPlastiQ or ESR material to be particularly effective. It will be apparent that upon dilution with the polymeric resin material(s), the concentration of odor-reducing agent in the article formed from such a blend is even lower (e.g., a 20 ppm level in the NuPlastiQ or ESR masterbatch may be dropped to only 10 ppm, only 5 ppm, or only 1 ppm in the finished article).

In some embodiments, the NuPlastiQ or ESR could be provided in a masterbatch formulation that may include the starch-based polymeric material as described above, the odor-reducing agent, and an amount of one or more compatibilizers. The masterbatch may also include one or more "other" polymeric resins already included therein (e.g., the same polymeric resin with which the starch-based polymeric resin is to be blended with to form a target article). Such masterbatch formulation pellets could be mixed with pellets of the "other" polymeric resin material at the time of processing. Any conceivable ratios may be used in mixing such different pellets, depending on the desired percentage of NuPlastiQ or ESR and/or compatibilizer and/or conventional polymeric resin in the finished article.

As noted above, the odor-reducing agent may typically be present in the starch-based polymeric material at a very low level, such as no more than 1%, no more than 0.1%, no more than 0.01%, no more than 1000 ppm, no more than 100 ppm, no more than 50 ppm, or no more than 20 ppm. Upon mixing the starch-based polymeric material including an odor-reducing agent with the polymeric resin, the level of odor-reducing agent in the resulting blended plastic article is reduced, depending on the mixing ratio of the starch-based polymeric material to the polymeric resin material. As noted herein, a wide variety of mixing ratios are suitable. By way of example, at a 1:1 mixing ratio, if the initial level of the odor-reducing agent in the starch-based polymeric material masterbatch is 20 ppm, it has now dropped to only 10 ppm, in the finished plastic article formed from the blend. At a mixing ratio of 25% of the starch-based polymeric material, and 75% of the polymeric resin material, an initial 20 ppm level for the odor-reducing agent has now dropped to 5 ppm.

It will be apparent that although the concentration of the odor-reducing agent has decreased, the ratio of the odor-reducing agent to the starch-based polymeric material remains unchanged due to such blending. For example, the weight ratio of odor-reducing agent to starch-based polymer may be from 1:1000, or even more dilute. For example the ratio may be 1:1000, 1:2000, 1:5000, 1:10,000, 1:15,000, 1:20,000, 1:25,000, 1:30,000, 1:35,000, 1:40,000, 1:45,000, 1:50,000, 1:60,000, 1:70,000, 1:80,000, 1:90,000, or 1:100,000. The ratio may be within a range between any such two values (e.g., 1:1000 to 1:100,000, or 1:10,000 to 1:80,000, or about 1:50,000). A level of 20 ppm for the odor-reducing agent in the starch-based polymeric material may be equivalent to a ratio of about 1:50,000. Even upon mixing with the polymeric resin material, this ratio may remain substantially constant as the addition of the polymeric resin material does not alter the amount of the odor-reducing agent or the starch-based polymeric material in the blend.

It will also be apparent that while the odor-reducing agent may be organic, it can be important that this component not be volatile, so that it is not simply driven off during hot processing of the article (as residual water content in the starch-based polymeric material may be). For example, the odor-reducing agent may be a solid, rather than a liquid at ambient temperature (e.g., 25°C) and pressure (e.g., 1 atm). If a liquid, the odor-reducing agent may exhibit a volatility that is less than that of water (e.g., as measured relative to vapor pressures at a given temperature and pressure (e.g., STP as noted above)). In an embodiment, the odor-reducing agent may have a boiling point greater than any temperatures associated with processing at 108 and 110". The odor-reducing agent may have a melting point that is less than a temperature associated with processing at 108 and/or 110". For example, the odor-reducing agent may be a solid at ambient temperature (e.g., 25°C), but may be a liquid at an elevated temperature (e.g., 125°C to 165°C) at which the processing occurs. 4-hydroxy-3-methoxybenzaldehyde is an example of such an odor-reducing agent.

For example, the odor-reducing agent may have a melting point that is at least 30°C, at least 50°C, less than 200°C, less than 190°C, less than 180°C, less than 175°C, less than 170 °C, less than 165°C, less than 160°C, less than 150°C, less than 145°C, less than 140°C, less than 135°C, than 130°C, less than 125°C, less than 120°C, less than 115°C, less than 120°C, less than 115°C, less than 110°C, less than 100°C, from 50°C to 180°C, from 50°C to 150°C, or from 60°C to 100°C. The odor-reducing agent may have a boiling point greater than 150°C, greater than 160°C, greater than 170°C, greater than 180°C, greater than 200°C, greater than 225°C, greater than 250°C, from 150°C to 500°C, from 200°C to 400°C, or from 250°C to 300°C. By way of example, vanillin melts at 81°C to 83°C, and boils at 285°C.

While FIG. 1B illustrates how an article may be produced from a polymeric resin (at 102), an odor-reducing agent (at 103), and a starch-based polymeric material (at 104), FIG. 1C illustrates a process 100‴ by which the odor-reducing agent may be incorporated into the starch-based polymeric material. For example, the odor-reducing agent may be provided at 103, the starch-based polymeric material is provided at 104, and they are mixed together at 106". By way of example, this may occur where the organic odor-reducing agent is mixed into the starch-based polymeric material when formulating a masterbatch (e.g., where the odor-reducing agent is added to the starch-based polymeric material when also adding a compatibilizer or other components to be included in the masterbatch). In another embodiment, the odor-reducing agent may be mixed with the starting material(s) from which the starch-based polymeric material is formed (e.g., by mixing the odor-reducing agent into one or more of the water, glycerin, or starch components, from which the starch-based polymeric material is formed). In any case, the selected method results in a starch-based polymeric material that includes the odor-reducing agent dispersed therein. The concentration thereof may be very low (e.g., 20 ppm), as described herein. At 110‴, such a starch-based polymeric material (including the odor-reducing agent) may be used to produce an article, by blending with a polymeric resin (e.g., typically involving application of heat, to melt and blend the thermoplastic materials together).

Returning to standard characteristics that may apply to any of the embodiments described herein, subjection to biodegradation testing (e.g., whether biomethane potential testing, or any applicable ASTM standard, such as ASTM D-5511, ASTM D-5526, ASTM D-5338, or ASTM D-6691) may be characterized. Under such testing, and within a given time period (e.g., 30 days, 60 days, 90 days, 180 days, 365 days (1 year), 2 years, 3 years, 4 years, or 5 years, the article may show substantial biodegradation of the total polymeric content, and/or any non-biodegradable "other" polymeric content (apart from the starch-based polymeric content). Biomethane potential testing is typically conducted over 30 or 60 days, although sometimes for as long as 90 days. The longer time period tests are more typically performed under any of the above mentioned ASTM standards. For example, an article that may be free or substantially free of a biodegradation enhancing additive may show biodegradation that is greater than the starch-based polymeric material content thereof, indicating that the other plastic material(s) are also biodegrading (or exhibit the potential to biodegrade under a biomethane potential test).

Particularly when subjecting the articles to testing simulating biodegradation under landfill or other disposal and/or degradation conditions (e.g., composting conditions, or marine conditions) for 180 days, 200 days, 365 days (1 year), 2 years, 3 years, or 5 years, the biodegradation is greater than the weight percent of starch-based polymeric materials within the article. In other words, inclusion of the described starch-based polymeric materials results in at least some biodegradation of an otherwise non-biodegradable "other" polymeric material.

For example, an article that is formed from a blend of the starch-based polymeric materials and PE may exhibit biodegradation after such periods of time that is greater than the weight fraction of the starch-based polymeric materials in the film, indicating that the PE (heretofore considered to not be biodegradable) is actually being biodegraded, with the starch-based polymeric material. Such results are surprising, and particularly advantageous.

Biomethane potential testing determines the potential for anaerobic biodegradation based on methanogenesis as a percent of total methanogenesis potential. Biomethane potential testing can be used to predict biodegradability of the tested samples according to the ASTM D-5511 standard and the biomethane potential testing can be conducted using one or more conditions from the ASTM D-5511 standard. For example, the biomethane potential testing can take place at a temperature of about 52°C. Additionally, the biomethane potential testing can have some conditions that are different from those of ASTM D-5511, e.g., to accelerate the test so to be completed within the typical 30, 60, or sometimes as long as 90 days. Biomethane potential testing can employ an inoculum having from 50% to 60% by weight water and from 40% to 50% by weight organic solids. For example, an inoculum used in biomethane potential testing can have 55% by weight water and 45% by weight organic solids. Biomethane potential testing can also take place at other temperatures, such as from 35°C to 55°C or from 40°C to 50°C.

When subjected to biodegradation testing, an article having no greater than about 2% by weight of a biodegradation enhancing additive (or preferably being free thereof) and having an amount of starch-based polymeric material and "other" polymeric material as described herein can exhibit enhanced degradation, as a result of the introduction of the starch-based polymeric material into the article. For example, at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, or even at least 95% of the non-starch-based polymeric material (e.g., the "other" polymeric material) may biodegrade over a period of at least about 1 year, at least about 2 years, at least about 3 years, or at least about 5 years when subjected to landfill, composting, and/or marine conditions (or conditions simulating such). Such biodegradation is particularly remarkable and advantageous. Thus not only does the starch-based polymeric material biodegrade, but the "other" polymeric material does as well, even where such material is otherwise not biodegradable on its own.

The Examples show that with increased time, the amount of biodegradation can be very high, such that in at least some implementations, substantially the entire article biodegrades (e.g., biodegradation of at least about 85%, at least about 90%, or at least about 95% within 180 days, or 200 days, or 365 days (1 year), within 2 years, within 3 years, within 5 years, or other period).

FIG. 2A illustrates components of an example manufacturing system 200 to produce articles according to the present disclosure. In some cases, the manufacturing system 200 can be used in the process 100 of FIG. 1, or any of those of FIGs 1A-1C. In an illustrative example, the manufacturing system 200 is an extruder, such as a single screw extruder or a twin screw extruder.

In an implementation, one or more non-biodegradable plastic materials and one or more starch-based polymeric materials are provided via a first hopper 202 and a second hopper 204. A compatibilizer may be included with either or both materials (e.g., in a masterbatch thereof).

The one or more starch-based polymeric materials and the one or more non-biodegradable plastic materials can be mixed in a first chamber 206 to produce a mixture of materials. In some cases, the mixture of materials can include from 5% by weight to 40% by weight of the one or more starch-based polymeric materials, from 60% by weight to 94% by weight of the one or more non-biodegradable plastic materials, and from 1% by weight to 9% by weight of the one or more compatibilizers. As described herein, a small amount of odor-reducing agent may also be present. The ranges of course may be varied outside the above ranges, depending on desired characteristics.

In the example implementation shown in FIG. 2A, the mixture of materials can pass through a number of chambers, such as the first chamber 206, a second chamber 208, a third chamber 210, a fourth chamber 212, a fifth chamber 214, and an optional sixth chamber 216. The mixture of materials can be heated in the chambers 206, 208, 210, 212, 214, 216. In some cases, a temperature of one of the chambers can be different from a temperature of another one of the chambers. In an illustrative example, the first chamber 206 is heated to a temperature from 120°C to 140°C; the second chamber 208 is heated to a temperature from 130°C to 160°C; the third chamber 210 is heated to a temperature from 135°C to 165°C; the fourth chamber 212 is heated to a temperature from 140°C to 170°C; the fifth chamber 214 is heated to a temperature from 145°C to 180°C; and the optional sixth chamber 216 is heated to a temperature from 145°C to 180°C.

The heated mixture can then be extruded using a die 218 to form an extruded object, such as a film, sheet, or the like. Injection molding, thermoforming, or other plastic production processes may be used to manufacture various articles such as utensils, plates, cups, bottles, caps or lids therefore, or the like. In film blowing, a gas can be injected into the extruded object to expand it with a pressure from 105 bar to 140 bar. The resulting tube 220 can be drawn up through rollers 222 to create a film 224 with a thickness typically from 0.02 mm (about 0.8 mil) to 0.05 mm (about 2 mil). Even thinner films can be made using the blends as described herein, e.g., having a thickness as little as 0.1 mil (0.0025 mm). Of course, thicknesses greater than 0.05 mm (2 mil) can also be achieved. In some cases, the film 224 can be comprised of a single layer. In other cases, the film 224 can be comprised of multiple layers. Where multiple layers are present, at least one of the layers may include the starch-based polymeric material. In some embodiments, the starch-based polymeric material may be present in one or more outer layers. In another embodiment, the starch-based polymeric material may be present in an inner layer. Where no starch-based polymeric material is included in the outer layer(s), biodegradation of the outer layer(s) may not occur.

FIGS. 2B and 2C schematically illustrate die 218, and the formation of bubble 220, showing additional detail relative to the blown film apparatus of FIG. 2, and showing particularly how characteristics of blow up ratio and die gap may be particularly selected for increased strength. As shown in FIGS. 2B and 2C, the die 218 may include an outer member 218a and an inner member 218b, with a die gap 226 defined therebetween. As described herein, die 218 may be particularly configured to provide a narrow die gap, e.g., less than 1000 microns, less than 900 microns, less than 800 microns, less than 700 microns, less than 600 microns, or less than 500 microns (e.g., 200 to 500 microns). This narrow die gap is in sharp contrast to the wide die gaps used (and perhaps necessary) in the state of the art when blowing films including other thermoplastic starch components. For example, Leufgens describes die gaps of 1.6 to 1.8 mm (i.e., 1600 to 1800 microns). Even at a high blow up ratio, use of such a large die gap may make it impossible to achieve the increases in strength described herein.

FIG. 2B further illustrates the relatively high blow up ratio, which is defined as the ratio between the maximum diameter of the bubble (D_{B}) divided by the diameter at the die gap (D_{D}). Stated another way, related to the lay flat width of the film, the blow up ratio is equal to 0.637*(Lay Flat Width)/D_{D}. The frost line 228 is also shown in FIG. 2B, the point at which the previously molten material of the bubble begins to crystallize, so as to have a more translucent appearance above such crystallization region at the frost line 228. As described herein, the blow up ratio is at least 2.0, e.g., 2.1, 2.2, 2.3, 2.4, 2.5, 2.6, 2.7, 2.8, 2.9, 3.0, 2.2 to 2.8, or about 2.5. Applicant have observed increased strength for the film simply by increasing the blow up ratio, from a typical blow forming blow up ratio of say 1.5 to a value of at least 2, such as 2.5. Strength has been observed to increase for values up to about 3, after which no significant further increases in strength were observed, such that values of 2-3, 2.2 to 2.8, or about 2.5 are particularly appropriate. As described herein, the die gap may be maintained at a narrow value, to also contribute to the described increases in strength, when blowing blends including the particularly described renewable starch-based polymeric materials.

By way of example, die gaps of less than 500 microns and blow up ratios of at least 2 (e.g., 2.2 to 2.8, or about 2.5) are particularly well suited to blowing films from such blends having thicknesses of up to 0.038 mm (1.5 mils) (e.g., 0.0025 mm (0.1 mil) to 0.038 mm (1.5 mils)). In order to blow thicker films (where a thicker film were needed), the die gap may need to be increased to accommodate flow of the molten material therethrough. For example, in order to blow a very thick film of 0.25 mm (10 mils), or even 0.13 mm (5 mils), the die gap may need to be increased somewhat (although the value may still be less than 1000 microns, or even less than 500 microns).

The concepts described herein will be further described in the following examples.

### EXAMPLES

### Example 1

Eleven starch-based polymers were formed from 27% tallow glycerin (99% pure glycerin) and 73% starch, exclusive of the water. Each finished starch-based polymer exhibited < about 1% water, and was mixed with LLDPE and anhydride-modified LLDPE in proportions of 25%, 70%, and 5%, respectively, by weight. The resulting mixtures were then extruded and blown into films. 70% of each film was LLDPE, 25% was the starch-based polymer, and 5% of each film was anhydride-modified LLDPE. The films were then tested using a falling dart impact test according to ASTM D-1709. The combinations of starches tested and strength test results (in grams) are shown in Table 3. The results of Table 3 show that samples formed from a mixture of starches have dart drop impact test values that are greater than the dart drop impact test values of samples formed from a single starch.

**Table 3**

| Sample No. | Starch Content (%) | | | Thickness mm (mil) | Dart Test (g) | Dart Strength g/mm (g/mil) | Percent Increase in Dart Strength (%) |
|---|---|---|---|---|---|---|---|
| | Potato | Corn | Tapioca | | | | |
| 1 | 0 | 100 | 0 | 0.039 (1.535) | 347 | 8907.5 (226.1) | N/A |
| 2 | 100 | 0 | 0 | 0.039 (1.535) | 362 | 9283.4 (235.8) | N/A |
| 3 | 0 | 0 | 100 | 0.039 (1.550) | 367 | 9322.8 (236.8) | N/A |
| 4 | 80 | 20 | 0 | 0.039 (1.550) | 387 | 9830.7 (249.7) | 6.8% |
| 5 | 0 | 20 | 80 | 0.039 (1.550) | 387 | 9830.7 (249.7) | 6.4% |
| 6 | 0 | 80 | 20 | 0.039 (1.550) | 387 | 9830.7 (249.7) | 9.4% |
| 7 | 0 | 10 | 90 | 0.039 (1.550) | 387 | 9830.7 (249.7) | 5.9% |
| 8 | 33.33 | 33.33 | 33.33 | 0.038 (1.500) | 387 | 10157.5 (258) | 10.9% |
| 9 | 80 | 0 | 20 | 0.038 (1.500) | 387 | 10157.5 (258) | 9.3% |
| 10 | 10 | 0 | 90 | 0.038 (1.500) | 387 | 10157.5 (258) | 9.0% |
| 11 | 0 | 90 | 10 | 0.038 (1.500) | 387 | 10157.5 (258) | 13.6% |

FIG. 5 charts dart impact test strength for different thickness films (0.013 mm (0.5 mil), 0.025 mm (1 mil), 0.038 mm (1.5 mil), 0.05 mm (2.0 mils)) based on percentage of starch-based NuPlastiQ or "ESR" in the film. The NuPlastiQ or ESR used in the films formed shown in FIG. 5 was formed from a blend of starches including 90% corn starch and 10% potato starch. FIG. 5 shows how the strength of the film increases with increasing NuPlastiQ or ESR percentage, up to a maximum strength at about 20% to about 25% NuPlastiQ or ESR. The balance of the blend included polyethylene and an appropriate compatibilizer, as described herein.

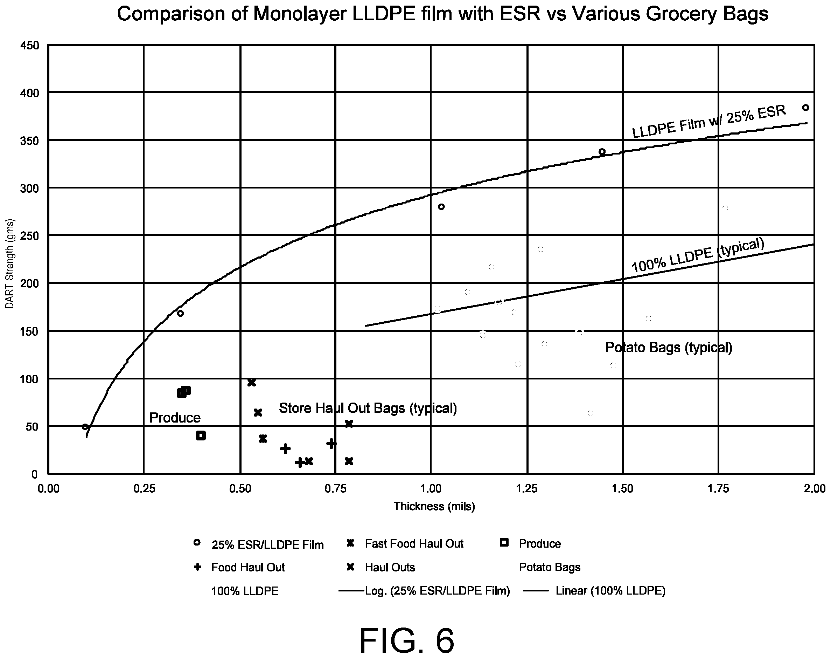

FIG. 6A charts dart impact test strength for different thickness films (from about 0.0025 mm (0.1 mil) up to 0.05 mm (2 mils)) for films including 25% starch-based polymeric material, with the balance being a small fraction of compatibilizer (e.g., about 5%) as described herein, and PE (about 70%). FIG. 6 also shows comparative strength for 100% PE films, which are at all points lower than for the blend according to the present disclosure. FIG. 6 further shows various other tested reference points for produce bags (e.g., bags provided to consumers in a supermarket produce section for holding produce), for various "haul out" bags (e.g., grocery and other plastic bags provided for carry out), and for potato bags (plastic bags used to hold typically 5, 10 or 20 pounds of potatoes in the produce section of a supermarket). Example 8 is similar, but shows results for a blend in which the "other" polymeric material is a biopolyethylene, rather than synthetic LLDPE derived from petroleum sources.

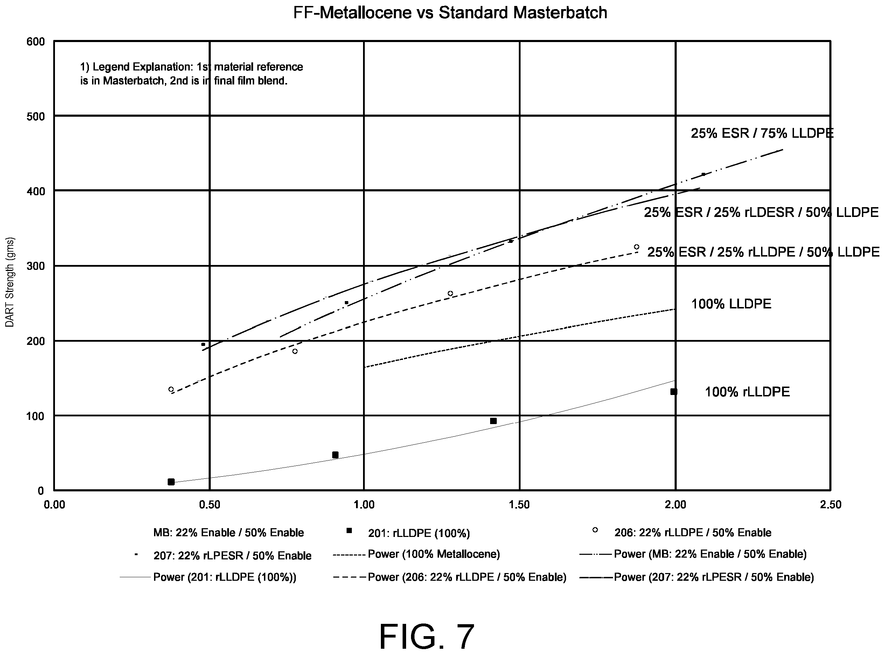

FIG. 7 charts dart impact test strength for different thickness films (from less than 0.012 mm (0.5 mil) up to about 0.05 mm (2 mils)) for various blended films according to the present disclosure, as well as comparative films (e.g., 100% LLDPE, 100% recycled LLDPE (rLLDPE). In addition to showing strength characteristics for a film formed from virgin materials (25% NuPlastiQ or ESR, 70% LLDPE, 5% compatibilizer (labeled 25% NuPlastiQ or ESR/75% LLDPE), FIG. 7 also shows strength resulting when such a recycled material (rLDESR) is then blended with virgin materials (labeled 25% NuPlastiQ or ESR/25% rLDESR/50% LLDPE), or where recycled LLDPE (rLLDPE) is used in the blend (labeled 25% NuPlastiQ or ESR/25% rLLDPE/50% LLDPE). The strength results are improved as compared to use of PE polymeric materials, as shown, in addition to the previously described characteristics of increased renewability and biodegradability.

### Example 2

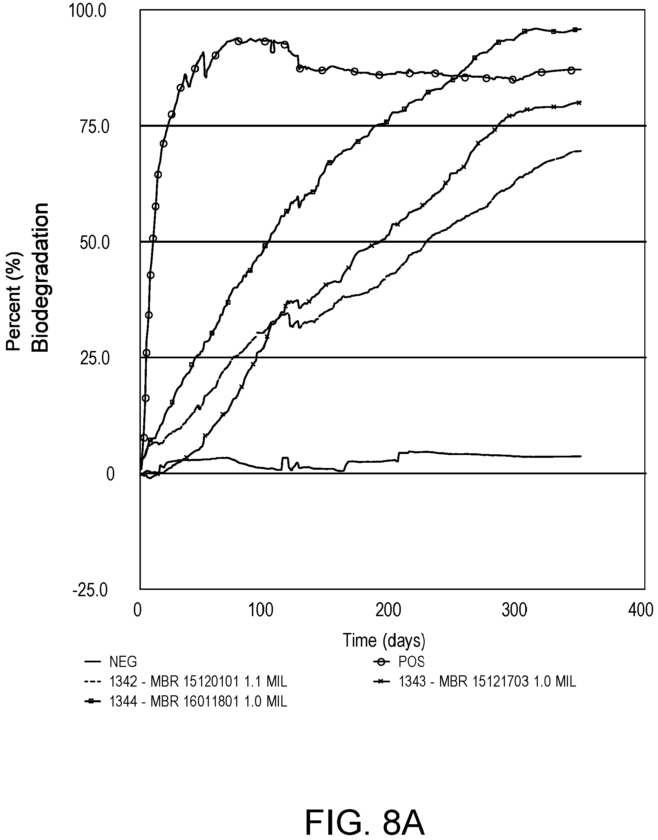

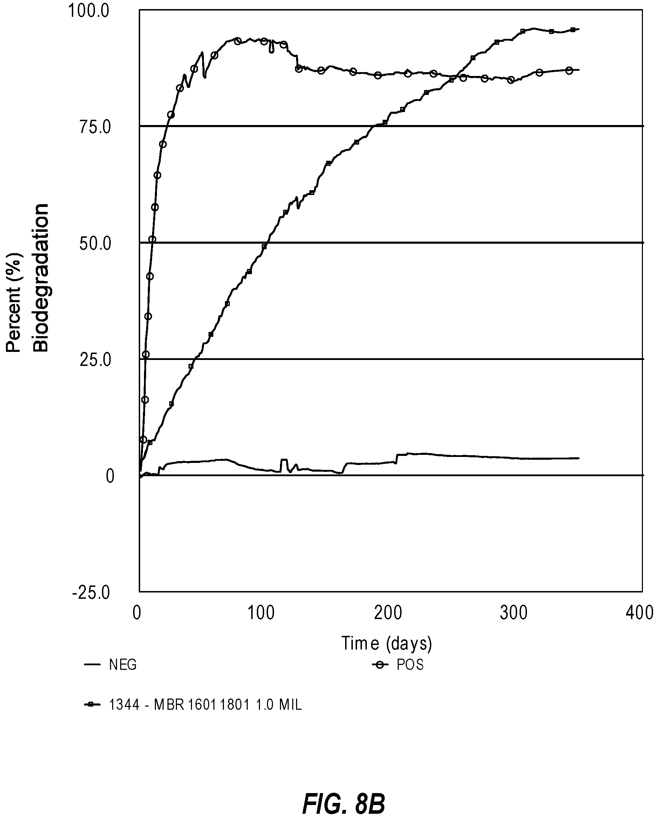

Three samples were tested for 349 days to determine biodegradability characteristics according to ASTM D-5511. The test was intended to replicate the conditions of a full-scale anaerobic digester (landfill). The results of the three samples (referred to as 1342, 1343, and 1344) are shown in FIGs. 8A-8B and in Table 4. Figure 8A shows results for all of samples 1343, 1343, and 1344, as compared to the controls. Figure 8B shows the results for sample 1344 alone, as compared to the controls. Sample 1342 was formed from 30% NuPlastiQ or ESR (the substantially amorphous starch-based polymeric material with less than 10% crystallinity), 67% PBAT, and 3% compatibilizer, and had a thickness of 0.0279 mm (1.1 mil). Sample 1343 was formed from 27.5% NuPlastiQ or ESR, 70% PBAT and 2.5% compatibilizer, and had a thickness of 0.025 mm (1.0 mil). Sample 1344 was formed from 40% NuPlastiQ or ESR, 56% LLDPE and 4% compatibilizer, and had a thickness of 0.025 mm (1.0 mil).

**Table 4**

| | Inoculum | Negative | Positive | 1342 | 1343 | 1344 |
|---|---|---|---|---|---|---|
| Cumulative Gas Volume (mL) | 4064.3 | 4898.8 | 12330.2 | 18429.0 | 20233.7 | 31171.1 |
| Percent CH₄ (%) | 43.2 | 43.6 | 41.4 | 48.8 | 53.7 | 51.7 |
| Volume CH₄ (mL) | 1757.0 | 2135.1 | 5101.0 | 8992.6 | 10865.0 | 16106.6 |
| Mass CH₄ (g) | 1.26 | 1.53 | 3.64 | 6.42 | 7.76 | 11.5 |
| Percent CO₂ (%) | 40.4 | 37.8 | 41.9 | 35.5 | 35.7 | 38.0 |
| Volume CO₂ (mL) | 1643.0 | 1852.9 | 5160.5 | 6547.5 | 7230.7 | 11838.7 |
| Mass CO₂ (g) | 3.23 | 3.64 | 10.14 | 12.86 | 14.20 | 23.25 |
| Sample Mass (g) | 10 | 10 | 10 | 20.0 | 20.0 | 20 |
| Theoretical Sample Mass (g) | 0.0 | 8.6 | 4.2 | 9.8 | 9.8 | 13.7 |
| Biodegraded Mass (g) | 1.82 | 2.14 | 5.50 | 8.33 | 9.69 | 14.97 |
| Percent Biodegraded (%) | | 3.7 | 87.1 | 66.4 | 80.2 | 95.8 |

FIGs. 8A-8B show that after 204 days, the negative control showed 2.5% degradation, the positive control showed 86.5% degradation, sample 1342 showed 43.3% degradation, sample 1343 showed 53.9% degradation, and sample 1344 showed 77.2% degradation. At 349 days, the degradation values are as shown in Table 4.

The biodegradation after 349 days is particularly excellent. For example, while samples including PBAT (1342 and 1343) show very good biodegradation, with the percent biodegraded being far greater than the fraction of the starch-based polymeric material included in the film, sample 1344 (see FIG. 8B) is even more surprising, showing nearly 96% biodegradation (even higher than the positive control), where the non-biodegradable plastic material is polyethylene, which under normal circumstances is of course not biodegradable (e.g., see the negative control, in Table 4 which was 100% polyethylene). Such biodegradation results are remarkable, and particularly advantageous.

### Example 3

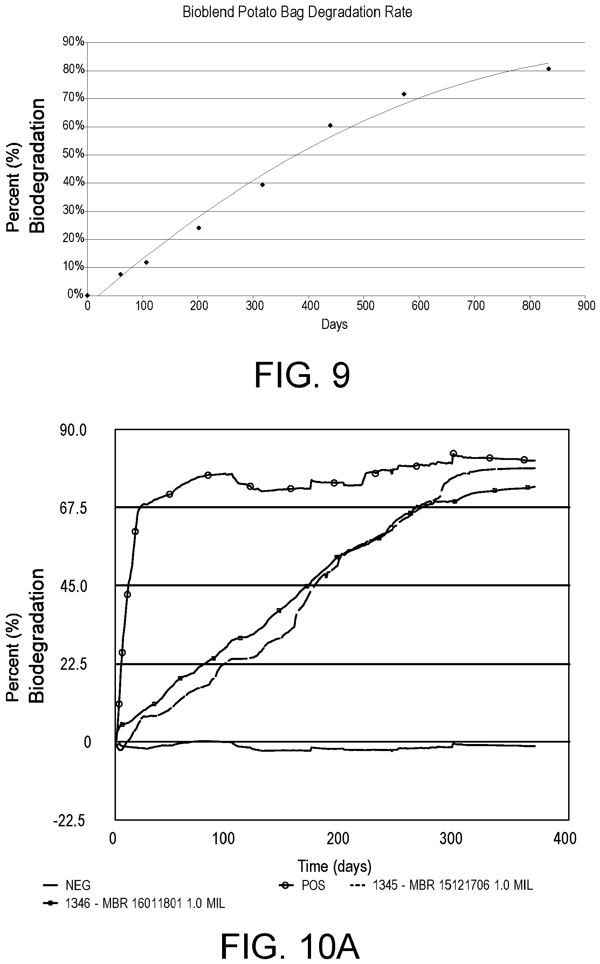

Potato packaging bags made with a blend of 25% NuPlastiQ or ESR, 70% LLDPE and 5% compatibilizer were tested for anaerobic biodegradation after 60 days, 107 days, 202 days, 317 days, 439 days, 573 days, and 834 days according to ASTM D-5526. The test was intended to replicate the conditions of a full-scale anaerobic digester (landfill). The test was conducted under various conditions, with an inoculum having about 35%, 45%, and 60% organic solids with the balance being water. The results for the inoculum including 35% organic solids (and 65% water) are shown in FIG. 9 and Table 5A. Table 5B shows results for other inoculum values, and for other samples. The potato bags had a thickness of 0.034 mm (1.35 mils). These bags are referred to as sample 1072.

**Table 5A**

| 35% Solids @ 60 Days | | 35% Solids @ 107 Days | | 35% Solids @ 202 Days | | 35% Solids @ 317 Days | | 35% Solids @ 439 Days | | 35% Solids @ 573 Days | | 35% Solids @ 834 Days | |
|---|---|---|---|---|---|---|---|---|---|---|---|---|---|
| 7.60% | | 11.80% | | 24.10% | | 39.40% | | 60.50% | | 71.70% | | 80.70% | |

The potato bags made with 25% NuPlastiQ or ESR, and 70% LLDPE showed a remarkable 81% biodegradation over 834 days under simulated landfill conditions. The NuPlastiQ or ESR is homogeneously blended with the polyethylene, and advantageously results in the long carbon chains of the polyethylene being broken up, and digested by the same microorganisms that consume the starch-based polymeric NuPlastiQ or ESR material. Such results show that the entire bag, including the polyethylene is being biodegraded into carbon dioxide, methane, and water. Such results are surprising and particularly advantageous.

The testing conducted with 45% organic solids and 60% organic solids also showed results in which the percent of biodegradation exceeded the percent of NuPlastiQ or ESR included in the potato bag. Tests were also run with similar potato bags including 1% of a biodegradation enhancing additive (sample 1073), and other similar potato bags including EcoFLEX^{™} compostable resin, and metallocene LLDPE (sample 1075).

**Table 5B**

| | Negat tive Contr ol | | | Po sitive Contr ol | | |
|---|---|---|---|---|---|---|
| Percent Solids | 60% | 45% | 35% | 60% | 45% | 35% |
| Percent Biodegraded @ 834 days | 1.20% | 0.5% | 1.5% | 91.2% | 91.2% | 91.4% |
| | | | | | | |

| | Sam ple 1072 | | | Sample 107 3 | | |
|---|---|---|---|---|---|---|
| Percent Solids | 60% | 45% | 35% | 60% | 45% | 35% |
| Percent Biodegraded @ 834 days | 58.3% | 67.7% | 80.7% | 54.5% | 67.9% | 80.3% |

| | Sam ple 1075 | | | | | |
|---|---|---|---|---|---|---|
| Percent Solids | 60% | 45% | 35% | | | |
| Percent Biodegraded @ 834 days | 72.7% | 83.3% | 86.1% | | | |

### Example 4

Films made with a blend of NuPlastiQ or ESR and LLDPE were tested for anaerobic biodegradation after 201 days and 370 days according to ASTM D-5338. The conditions were meant to simulate aerobic digestion and/or industrial compost conditions. The tested films are labeled 1345 and 1346 in Table 6 and FIGs. 10A-10B, which show the results after 370 days. At 201 days, samples 1345 and 1346 respectively showed adjusted percent biodegraded values of 74.2% and 72.4%, while the negative control showed -3.3% and the positive control showed 100%. FIGs. 10A-10B plot actual % biodegradation. Sample 1345 included 25% NuPlastiQ or ESR, 72.5% LLDPE, and 2.5% compatibilizer. Sample 1346 included 40% NuPlastiQ or ESR, 56% LLDPE, and 4% compatibilizer. Both films had a thickness of 0.025 mm (1.0 mil).

**Table 6**

| | Inoculum | Negative | Positive | 1345 | 1346 |
|---|---|---|---|---|---|
| Cumulative Gas Volume (mL) | 3168.2 | 2864.3 | 10740.0 | 27603.3 | 24364.9 |
| Percent CO₂ (%) | 81.4 | 82.6 | 83.5 | 89.3 | 87.8 |
| Volume CO₂ (mL) | 2577.8 | 2366.4 | 8965.3 | 24638.1 | 21400.0 |
| Mass CO₂ (g) | 5.06 | 4.65 | 17.61 | 48.40 | 42.04 |
| Sample Mass (g) | 1000 | 10 | 10 | 20.0 | 20.0 |
| Theoretical Sample Mass (g) | 0.0 | 8.6 | 4.2 | 15.0 | 13.7 |
| Biodegraded Mass (g) | 1.38 | 1.27 | 4.80 | 13.20 | 11.46 |
| Percent Biodegraded (%) | | -1.3 | 81.1 | 78.8 | 73.5 |
| Adjusted Percent Biodegraded (%) | | -1.6 | 100.0 | 97.2 | 90.7 |

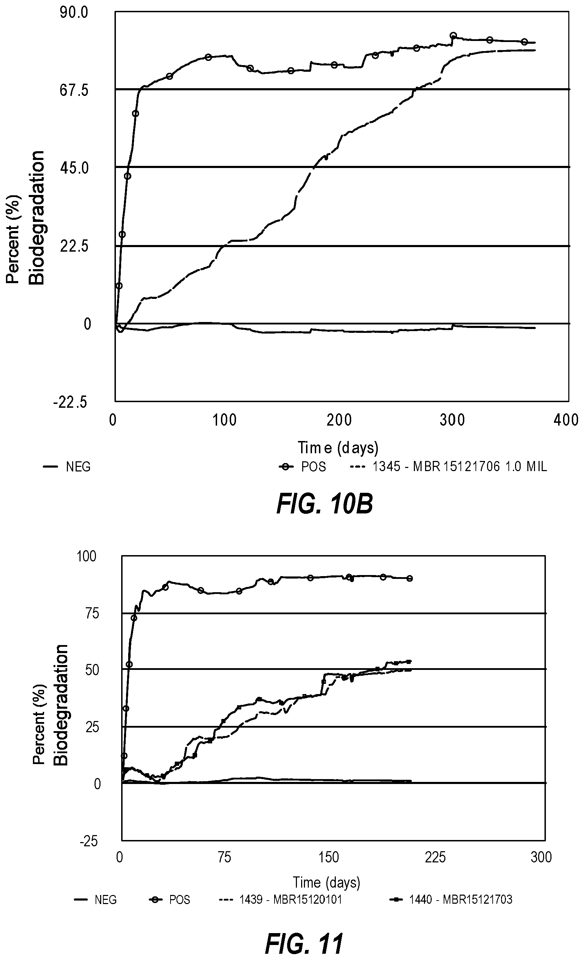

The biodegradation after 370 days, especially in sample 1345 is particularly excellent. This sample (see FIG. 10B) shows over 97% biodegradation where the non-biodegradable plastic material is polyethylene, which under normal circumstances is of course not biodegradable (e.g., see the negative control, in Table 6 which was 100% polyethylene). Such biodegradation results are remarkable, and particularly advantageous.

### Example 5

Films made with a blend of NuPlastiQ or ESR and PBAT were tested for anaerobic biodegradation after 205 days according to ASTM D-6691, which is meant to simulate marine conditions. The tested films are labeled 1439 and 1440 in Table 7 and FIG. 11. At 205 days, samples 1439 and 1440 respectively showed adjusted percent biodegraded values of 49.6% and 53.6%. Sample 1439 included 30% NuPlastiQ or ESR, 67% PBAT, and 3% compatibilizer. Sample 1440 included 27% NuPlastiQ or ESR, 70% PBAT, and 2.5% compatibilizer. Sample film 1439 had a thickness of 0.028 mm (1.1 mil), and sample film 1440 had a thickness of 0.025 mm (1.0 mil).

**Table 7**

| | Inoculum | Negative | Positive | 1439 | 1440 |
|---|---|---|---|---|---|
| Cumulative Gas Volume (mL) | 22.0 | 25.4 | 86.7 | 61.6 | 65.2 |
| Percent CO₂ (%) | 91.8 | 85.4 | 88.7 | 91.7 | 91.3 |
| Volume CO₂ (mL) | 20.2 | 21.7 | 76.9 | 56.4 | 59.5 |
| Mass CO₂ (g) | 0.040 | 0.043 | 0.151 | 0.111 | 0.117 |
| Sample Mass (g) | | 0.080 | 0.080 | 0.080 | 0.080 |
| Theoretical Sample Mass (g) | | 0.069 | 0.034 | 0.039 | 0.039 |
| Biodegraded Mass (g) | 0.011 | 0.012 | 0.041 | 0.030 | 0.032 |
| Percent Biodegraded (%) | | 1.2 | 90.0 | 49.6 | 53.6 |

### Example 6

Additional manufactured films were tested for biodegradability. Table 8 below summarizes the results of such testing, some of which are described in detail above. Such testing shows excellent biodegradability results across a wide range of fractions of starch-based polymeric materials, and different polymeric materials, under various simulated conditions (e.g., landfills, composting, marine environments).

**Table 8**

| | Sample 1072 | Sample MBR 16011801 | Sample MBR 15121706 | Sample MBR 16011801 | Sample MBR 16070601 | Sample MBR 15120101 | Sample MBR 15121703 |
|---|---|---|---|---|---|---|---|
| Test Condition | Landfill ASTM D-5526 | Landfill ASTM D-5511 | Compost ASTM D-5338 | Compost ASTM D-5338 | Compost ASTM D-5338 | Marine ASTM D-6691 | Marine ASTM D-6691 |
| NuPlastiQ or ESR % | 25% | 40% | 25% | 40% | 40% | 30% | 27% |
| Compatibilizer + PE % | 75% | 60% | 75% | 60% | 11% | 3% | 3% |
| PBAT % | 0% | 0% | 0% | 0% | 49% | 67% | 70% |
| Thickness | 0.035 mm (1.35 mil) | 0.025 mm (1 mil) | 0.025 mm (1 mil) | 0.025 mm (1 mil) | 0.038 mm (1.5 mil) | 0.025 mm (1 mil) | 0.025 mm (1 mil) |
| Days | 573 | 204 | 201 | 201 | 59 | 205 | 205 |
| % Degraded | 71.1% | 77.2% | 74.2% | 72.4% | 96.9% | 49.6% | 53.6% |

### Example 7

Additional testing was performed for evaluating biodegradability for different loading levels of the starch-based polymeric material, according to the present invention. Testing was in accordance with ASTM D5511. The level of starch-based polymeric material in the tested samples was 0% (a control), 1%, 5%, 10%, and 20% by weight of the blend. Table 9 below summarizes the results of such testing. Even with 1% loading, the percentage biodegradation after 65 days (2.7%) is greater than the load amount (only 1%), indicating that the polyethylene included in the blend is being degraded also. This trend continues in the data seen at 95 days, where the percent biodegradation continues to increase (e.g., 5% at 95 days). Further accelerated results are seen at the higher loadings of 5%, 10%, and 20% of the starch-based polymeric material. It is expected that in all samples loaded with the biodegradability lending starch-based polymeric material, that the entire non-biodegradable plastic content will be degraded, e.g., within a reasonable time period (e.g., within 1 year, 2 years, 3 years, 4 years, or 5 years) under such disposal conditions.

**Table 9**

| Sample No. | % NuPlastiQ or ESR | Biodegradation After 65 days | Biodegradation After 95 days |
|---|---|---|---|
| 1515 | 0% | -0.1% | 1.3% |
| 1516 | 1.0% | 2.7% | 5.0% |
| 1518 | 5.0% | 7.8% | 9.4% |
| 1519 | 10% | 22.2% | 27.2% |
| 1520 | 20% | 42.5% | 50.5% |

### Example 8

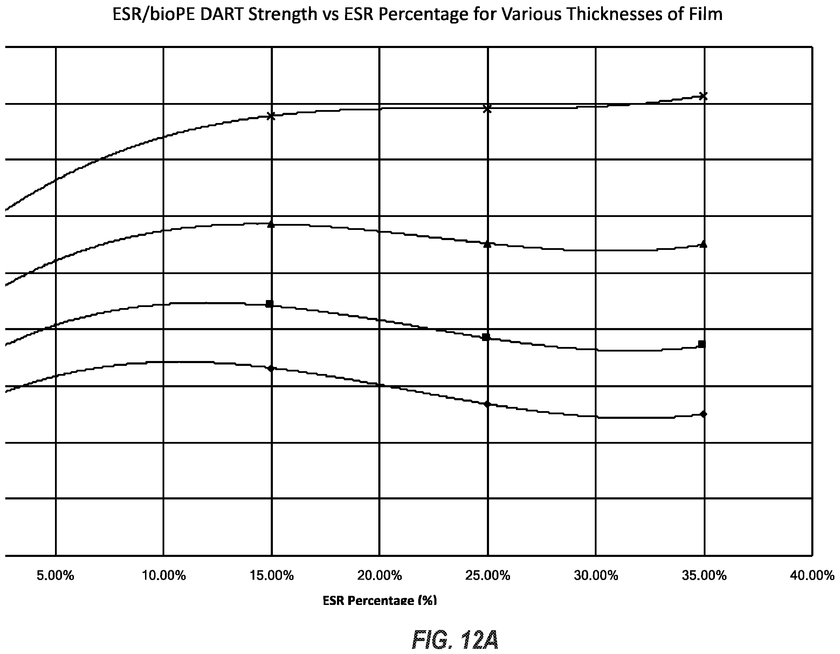

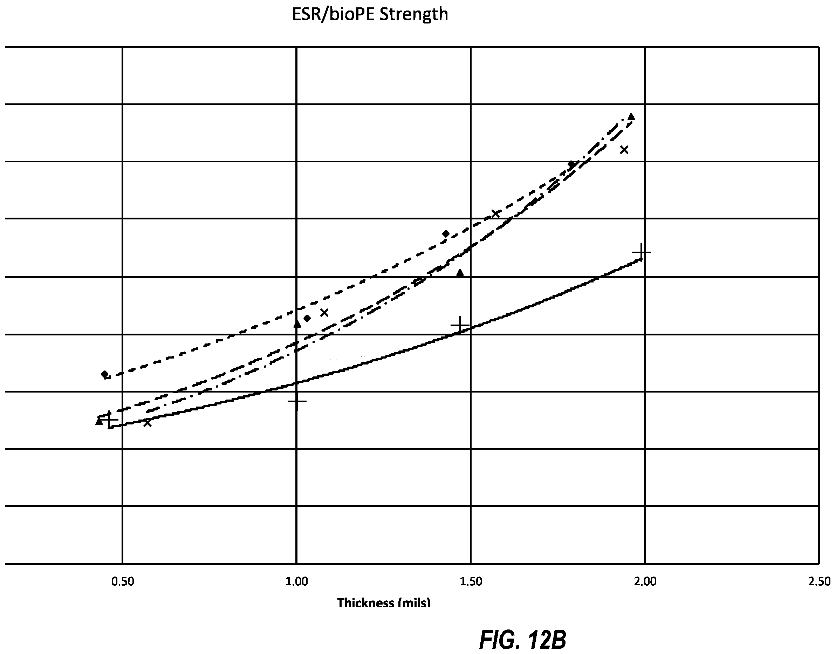

Films were manufactured from a blend of bio-polyethylene (sourced from Braskem), NuPlastiQ or ESR, and a Bynel^{®} compatibilizer. Once formed, the resulting films were tested for dart strength (e.g., according to ASTM D-1709). Films were blown at various thicknesses, from 0.013 mm (0.5 mil) up to 0.05 mm (2 mils), and at various percentages of a starch-based polymeric material (NuPlastiQ or ESR) ranging from 0% to 35% NuPlastiQ or ESR by weight. The results are shown in FIGs. 12A and 12B.

As is apparent from FIG. 12A, the bio-polyethylene alone (no NuPlastiQ or ESR) provides a dart strength of about 120 g for a thickness of 0.012 mm (0.5 mil), a dart strength of about 155 g for a thickness of 0.025 mm (1 mil), a dart strength of about 200 g for a thickness of 0.038 mm (1.5 mils), and a dart strength of about 270 g for a thickness of 0.05 mm (2 mils). The approximate dart strengths are shown in Table 10A. Table 10B shows percentages of strength increases as compared to the pure bio-polyethylene film. It is readily apparent that there are increases for all thicknesses, and all tested percentages of NuPlastiQ or ESR in the film. The increases in strength are particularly high as the films become thicker (i.e., the percentage increase is even more dramatic for thicker films as compared to thinner films).

**Table 10A**

| Dart Strength (g) | | | | |
|---|---|---|---|---|
| NuPlastiQ or ESR % | 0.012 mm (0.5 mil) | 0.025 mm (1 mil) | 0.038 mm (1.5 mils) | 0.05 mm (2 mils) |
| 0% | 120 g | 160 g | 200 g | 270 g |
| 15% | 165 g | 225 g | 290 g | 385 g |
| 25% | 135 g | 195 g | 275 g | 395 g |
| 35% | 125 g | 190 g | 275 g | 410 g |

**Table 10B**

| Percent Increase in Dart Strength (%) | | | | |
|---|---|---|---|---|
| NuPlastiQ or ESR % | 0.012 mm (0.5 mil) | 0.025 mm (1 mil) | 0.038 mm (1.5 mils) | 0.05 mm (2 mils) |
| 0% | - | - | - | - |
| 15% | 38% | 41% | 45% | 43% |
| 25% | 13% | 22% | 38% | 46% |
| 35% | 4% | 19% | 38% | 70% |

In forming and testing such films, Applicant observed that the results of increased strength generally match up well with the results seen using synthetic petrochemical polyethylenes. As noted above, it was observed that when using the bio-polyethylene material in the blend, the improvement in strength increased more rapidly, as the thickness increased (i.e., the percentage increase is most dramatic for thicker films as compared to thinner films).

It was also observed that a sweetspot for starch-based NuPlastiQ or ESR with the bio-polyethylene may be at about 15%, rather than the about 25% observed with petrochemical sourced polyethylene. Nevertheless, increases in strength were similarly observed when blending NuPlastiQ or ESR with either base resin.

Finally, the films formed according to Example 8 include far more than 40% biocontent, which is a particular advantage, as both the base resin (e.g., any "green" sustainable polymeric material such as those described herein) and the starch-based or starch-based NuPlastiQ or ESR material are derived from sustainable materials. The only component in the films that did not count towards biocontent is the compatibilizer (and where available, a sustainable compatibilizer could be used). The biocontent may thus be at least 40%, at least 45%, at least 50%, at least 55%, at least 60%, at least 65%, at least 70%, at least 75%, at least 80%, at least 85%, at least 90%, or even at least 95% by weight of the film or other product. The films of Example 8 consisted of biocontent, other than the Bynel^{®} compatibilizer, such that they included greater than 90% biocontent by weight.

Finally, the films of Example 8 are substantially fully biodegradable, in a similar manner as described for the various other tested polyethylenes tested in the above described Examples. The present invention thus provides very high biocontent polymer films and other products, which are not only sustainable, but also biodegradable.

### Example 9

This example is illustrative of the effect of blow up ratio and/or die gap. Dart impact test strength is measured for various films, including films formed from polyethylene alone, and films formed from a blend of NuPlastiQ or ESR, polyethylene, and a compatibilizer. The films formed from a blend include 25% renewable starch-based polymeric material, 5% compatibilizer, and 70% polyethylene. All films are blown at a blow up ratio of about 2.5. Applicants have observed that while an increase in strength is observed when blowing films at increased blow up ratios with the blends, blow up ratio does not have any significant effect on strength when blowing a film from polyethylene alone. In other words, with polyethylene alone, the strength is substantially the same whether the blow up ratio is 1.5, 3, or anywhere in between. Table 11 below shows approximate dart impact strength values (in g) for various thickness films of the present invention compared to a control, as well as the percentage strength increase for the various blends as compared to the control.

**Table 11**

| Thickness mm (mil) | 100% PE (BUR of 1.5 - 2.5) Control | 10% NuPlastiQ or ESR (BUR = 2.5) | | 20% NuPlastiQ or ESR (BUR = 2.5) | | 25% NuPlastiQ or ESR (BUR = 2.5) | | 30% NuPlastiQ or ESR (BUR = 2.5) | |
|---|---|---|---|---|---|---|---|---|---|
| 0.012 (0.5) | 150 | 152 | 1% | 160 | 7% | 170 | 13% | 195 | 30% |
| 0.025 (1.0) | 210 | 240 | 14% | 260 | 24% | 265 | 26% | 275 | 31% |
| 0.038 (1.5) | 250 | 320 | 28% | 340 | 36% | 350 | 40% | 335 | 34% |
| 0.05 (2.0) | 290 | 380 | 31% | 420 | 45% | 430 | 48% | 380 | 31% |

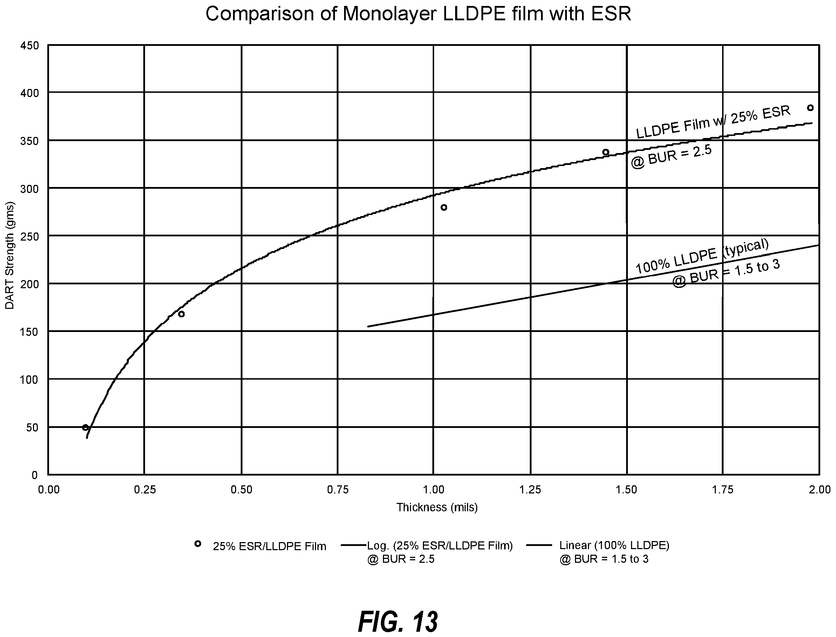

FIG. 13 shows additional comparative dart impact strength data for 100% polyethylene films at various film thicknesses, as compared to films formed from a blend of polyethylene and 25% NuPlastiQ or ESR renewable starch-based polymeric material, e.g., at a blow up ratio of about 2.5. FIG. 13 shows the ability to produce a film having a thickness of as little as 0.0025 mm (0.1 mil). As described herein, there may be considerable difficulty forming such a thin film from the polyethylene material alone. As indicated by FIG. 13, the strength of the 100% polyethylene film is substantially independent of blow up ratio (i.e., strength is substantially the same at a blow up ratio of 1.5, or at a blow up ratio of 2.0, or 2.5, or 3.0). At all points, the strength of the films formed from the 25% NuPlastiQ or ESR renewable starch-based polymeric material blend are greater than those of the film formed from polyethylene alone.

### Example 10

Examples 10-14 are illustrative of addition of an odor-reducing agent. Example 10 is a comparative example. Samples are prepared from a blend of a starch-based polymeric material and another polymeric resin (selected as polyethylene), as well as a maleic anhydride modified PE compatibilizer. The compatibilizer is included in an amount of 5% by weight. The amount of the starch-based polymeric material is varied from 5% up to 50% by weight, with the balance being the polyethylene polymeric resin. These samples do not include any odor-reducing agent, and exhibit a slight odor characteristic of the starch-based polymeric material, which may be described as a popcorn-like odor, caramel corn like odor, or slightly burned starch odor. While the odor is nearly unobservable when the geometry of the article is relatively open (e.g., a planar sheet or film of the material), the odor becomes more pronounced where the geometry is relatively closed (e.g., in the form of a cup, or where the film is wound on a roll).

### Example 11

Samples are prepared that are identical to those of Example 10, but which include a small fraction of 4-hydroxy-3-methoxybenzaldehyde (vanillin) therein as an odor-reducing agent. The odor-reducing agent is provided as a powder, e.g., as a freeze-dried powder. The powder is mixed with the liquid components used to make the starch-based polymeric material (e.g., water and/or glycerin) to obtain homogenous dispersion of the odor-reducing agent therein. The starch-based polymeric material is thereafter formed from the water, glycerin, and starches in the same manner as Example 10 (and Example 1), so that the finished starch-based polymeric material includes the odor-reducing agent dispersed therein at a level of 20 ppm (0.002%) by weight. In each sample, the ratio of the starch-based polymeric material to odor-reducing agent (NuPlastiQ or ESR to ORA ratio) is 50,000:1.

Characteristics for the samples are as shown in Table 12.

**Table 12**

| | Sample A | Sample B | Sample C | Sample D | Sample E | Sample F | Sample G |
|---|---|---|---|---|---|---|---|
| starch-Based Polymeric Material | 5% | 10% | 20% | 25% | 30% | 40% | 50% |
| Polyethylene | 90% | 85% | 75% | 70% | 65% | 55% | 45% |
| Compatibilizer | 5% | 5% | 5% | 5% | 5% | 5% | 5% |
| Odor-Reducing Agent in Blend | 1 ppm | 2 ppm | 4 ppm | 5 ppm | 6 ppm | 8 ppm | 10 ppm |
| Ratio of NuPlastiQJESR to ORA | 50,000:1 | 50,000:1 | 50,000:1 | 50,000:1 | 50,000:1 | 50,000:1 | 50,000:1 |

In contrast to the otherwise identical samples of Example 10, these samples no longer exhibit the slight characteristic odor described in Example 10. The difference in odor is particularly apparent with relatively closed geometries, such as where the blend is shaped into the form of a cup. By way of comparison, cups formed from such blends as shown in Table 12 exhibit no discernable odor, similar to cups formed from 100% polyethylene. It is surprising that so little of the odor-reducing agent is sufficient to counteract the otherwise characteristic odor typically associated with starch-based polymeric content.

### Example 12

Samples are prepared that are identical to those of Example 10, but which include a small fraction of freeze-dried strawberry powder therein as an odor-reducing agent. The powdered odor-reducing agent is dispersed in the starche-based polymeric material at a level of 20 ppm (0.002%) by weight.

Articles are formed in the same manner as in Example 10, but include a small fraction of the odor-reducing agent dispersed therein.

**Table 13**

| | Sample A | Sample B | Sample C | Sample D | Sample E | Sample F | Sample G |
|---|---|---|---|---|---|---|---|
| Starch-Based Polymeric Material | 5% | 10% | 20% | 25% | 30% | 40% | 50% |
| Polyethylene | 90% | 85% | 75% | 70% | 65% | 55% | 45% |
| Compatibilizer | 5% | 5% | 5% | 5% | 5% | 5% | 5% |
| Odor-Reducing Agent in Blend | 1 ppm | 2 ppm | 4 ppm | 5 ppm | 6 ppm | 8 ppm | 10 ppm |
| Ratio of NuPlastiQ/ESR to ORA | 50,000:1 | 50,000:1 | 50,000:1 | 50,000:1 | 50,000:1 | 50,000:1 | 50,000:1 |

In contrast to the otherwise identical samples of Example 10, these samples no longer exhibit the slight characteristic odor described in Example 10. The difference in odor is particularly apparent with relatively closed geometries, such as where the blend is shaped into the form of a cup. By way of comparison, cups formed from such blends as shown in Table 13 exhibit no discernable odor, similar to cups formed from 100% polyethylene. It is surprising that so little of the odor-reducing agent is sufficient to counteract the otherwise characteristic odor typically associated with starch-based polymeric content.

### Example 13

Samples are prepared that are identical to those of Example 10, but which include a small fraction of freeze-dried blueberry powder therein as an odor-reducing agent. The powdered odor-reducing agent is dispersed in the starch-based polymeric material at a level of 20 ppm (0.002%) by weight.

Articles are formed in the same manner as in Example 10, but include a small fraction of the odor-reducing agent dispersed therein.

**Table 14**

| | Sample A | Sample B | Sample C | Sample D | Sample E | Sample F | Sample G |
|---|---|---|---|---|---|---|---|
| Starch-Based Polymeric Material | 5% | 10% | 20% | 25% | 30% | 40% | 50% |
| Polyethylene | 90% | 85% | 75% | 70% | 65% | 55% | 45% |
| Compatibilizer | 5% | 5% | 5% | 5% | 5% | 5% | 5% |
| Odor-Reducing Agent in Blend | 1 ppm | 2 ppm | 4 ppm | 5 ppm | 6 ppm | 8 ppm | 10 ppm |
| Ratio of NuPlastiQ/ESR to ORA | 50,000:1 | 50,000:1 | 50,000:1 | 50,000:1 | 50,000:1 | 50,000:1 | 50,000:1 |

In contrast to the otherwise identical samples of Example 10, these samples no longer exhibit the slight characteristic odor described in Example 10. The difference in odor is particularly apparent with relatively closed geometries, such as where the blend is shaped into the form of a cup. By way of comparison, cups formed from such blends as shown in Table 14 exhibit no discernable odor, similar to cups formed from 100% polyethylene. It is surprising that so little of the odor-reducing agent is sufficient to counteract the otherwise characteristic odor typically associated with starch-based polymeric content.

### Example 14

Samples are prepared in a similar manner as in Example 10, but which include varying small fractions of freeze-dried vanillin powder therein as an odor-reducing agent. The powdered odor-reducing agent is dispersed in the starch-based polymeric material at levels from 5 ppm (0.0005%) to 100 ppm (0.01%) by weight.

Articles are formed in the same manner as in Example 10, but include a small fraction of the odor-reducing agent dispersed therein.

**Table 15**

| | Sample A | Sample B | Sample C | Sample D | Sample E | Sample F |
|---|---|---|---|---|---|---|
| Starch-Based Polymeric Material | 25% | 25% | 25% | 25% | 25% | 25% |
| Polyethylene | 70% | 70% | 70% | 70% | 70% | 70% |
| Compatibilizer | 5% | 5% | 5% | 5% | 5% | 5% |
| Odor-Reducing Agent in NuPlastiQ/ESR | 5 ppm | 10 ppm | 30 ppm | 50 ppm | 75 ppm | 100 ppm |
| Odor-Reducing Agent in Blend | 1 ppm | 2 ppm | 4 ppm | 6 ppm | 8 ppm | 10 ppm |
| Ratio of NuPlastiQ/ESR to ORA | 50,000:1 | 25,000:1 | 8,333:1 | 5,000:1 | 3,333:1 | 2,500:1 |

In contrast to the otherwise identical samples of Example 10, these samples no longer exhibit the slight characteristic odor described in Example 10. The difference in odor is particularly apparent with relatively closed geometries, such as where the blend is shaped into the form of a cup. By way of comparison, cups formed from such blends as shown in Table 15 exhibit no discernable odor, similar to cups formed from 100% polyethylene. It is surprising that so little of the odor-reducing agent is sufficient to counteract the otherwise characteristic odor typically associated with starch-based polymeric content. The relatively higher levels of vanillin (e.g., 100 ppm and higher) may begin to include a characteristic pleasant vanilla odor.

## Claims

1. An article produced from a mixture of materials comprising:
a substantially amorphous starch-based polymeric material formed from starch and a plasticizer, the starch-based polymeric material having a crystallinity of no more than 20%, and has a water content no greater than 2% by weight, the starch-based polymeric material being included in an amount of from 1% to 40% by weight of the mixture of materials; and
another polymeric material blended with the substantially amorphous starch-based polymeric material;
wherein at least one of:
a strength of the article is at least 5% greater than the article would have if made solely from the other polymeric material, without the starch-based polymeric material; or
at least 10% of the other polymeric material biodegrades over a period of at least 5 years under ASTM D-5511, ASTM D-5338 or ASTM D-6691, wherein the other polymeric material is non-biodegradable when taken alone.

2. The article of claim 1, wherein the other polymeric material comprises a polyolefin.

3. The article of claim 1, wherein the substantially amorphous starch-based polymeric material has a crystallinity of less than 20%, preferably less than 15%, more preferably less than 10%.

4. The article of claim 1, wherein the substantially amorphous starch-based polymeric material has a glass transition temperature, heat deflection temperature, or vicat softening temperature greater than 70°C, greater than 75°C, greater than 80°C, from 70°C to 100°C, or from 80°C to 100°C.

5. The article of claim 1, wherein the substantially amorphous starch-based polymeric material has a Young's modulus of at least 1.0 GPa.

6. The article of claim 1, wherein the other polymeric material comprises polyethylene, polypropylene or polystyrene.

7. The article of claim 6, wherein the article comprises a film, the film being formed from a blend of the starch-based polymeric material and polyethylene.

8. The article of claim 1, wherein the other polymeric material comprises one or more of polyethylene, polypropylene, polyethylene terephthalate, polyester, polystyrene, ABS, nylon, polyvinyl chloride, PBAT, or polycarbonate.

9. The article of claim 1, wherein the starch-based polymeric material is included in the mixture of materials in an amount of from 10 to 40% by weight of the mixture of materials.

10. The article of claim 1, wherein the mixture of materials includes from 5% by weight to 40% by weight of the starch-based polymeric material, from 60% by weight to 94% by weight of the other polymeric material, and from 1% by weight to 9% by weight of one or more compatibilizers.

11. The article of claim 1, wherein the article comprises a film, the film having a thickness that is from 0.0025 mm (0.1 mil) to 0.25 mm (10 mils).

12. The article of claim 1, wherein the strength of the article is at least 10% greater than the article would have if made solely from the other polymeric material, without the starch-based polymeric material.

13. The article of claim 1, wherein the other polymeric material comprises a sustainable polymeric material, wherein at least 90% of polymeric content of the article is sourced from sustainable sources.

14. The article of claim 1, wherein the blend of the substantially amorphous starch-based polymeric material and the other polymeric material further comprise an odor-reducing agent, the odor-reducing agent preferably being an organic odor-reducing agent, wherein in the absence of the odor-reducing agent, the starch-based polymeric material would lend a characteristic burned carbohydrate odor to the article, wherein the organic odor-reducing agent has the following chemical structure:

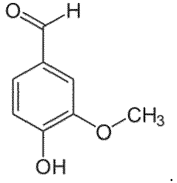

15. A method for providing increased sustainability to a plastic article, while also providing at least one of increased strength or biodegradability to the plastic article, the method comprising:
providing a polymeric material;
mixing with the polymeric material a substantially amorphous starch-based polymeric material formed from starch and a plasticizer, the starch-based polymeric material having a crystallinity of no more than 20%, and has a water content no greater than 2% by weight;
heating the mixture to a temperature in a range from 95°C to 205°C to melt-blend the polymeric material with the substantially amorphous starch-based polymeric material, the starch-based polymeric material being included in an amount of from 1% to 40% by weight of the mixture; and
forming a plastic article from the blend of the polymeric material and the substantially amorphous starch-based polymeric material wherein at least one of:
a strength of the article is at least 5% greater than the article would have if made solely from the polymeric material, without the starch-based polymeric material; or
at least 10% of the polymeric material degrades over a period of at least 5 years under ASTM D-5511, ASTM D-5338 or ASTM D-6691, wherein the polymeric material is non-biodegradable when taken alone.

16. The method of claim 15, wherein forming the plastic article comprises blowing a plastic film with a film blowing apparatus, the film being blown from the blend of the polymeric material and the substantially amorphous starch-based polymeric material, wherein:
(A) the film blowing apparatus operates at a high blow-up ratio of at least 2.0 when blowing the plastic film, wherein the high blow-up ratio provides the blown plastic film with increased strength; and/or
(B) a die gap of the film blowing apparatus is selected so as to be a narrow die gap of no more than 500 microns, wherein the narrow die gap provides the blown plastic film with increased strength.

## Patentansprüche

1. Gegenstand, hergestellt aus einem Materialgemisch umfassend:
ein im Wesentlichen amorphes Polymermaterial auf Stärkebasis, das aus Stärke und einem Weichmacher gebildet ist, wobei das Polymermaterial auf Stärkebasis eine Kristallinität von nicht mehr als 20 % aufweist und einen Wassergehalt von nicht höher als 2 Gew.-% aufweist, wobei das Polymermaterial auf Stärkebasis in einer Menge von 1 Gew.-% bis 40 Gew.-% des Materialgemischs enthalten ist; und
ein weiteres Polymermaterial, das mit dem im Wesentlichen amorphen Polymermaterial auf Stärkebasis gemischt ist;
wobei wenigstens eines von:
eine Festigkeit des Gegenstands wenigstens 5 % höher ist als sie der Gegenstand aufweisen würde, wenn er ausschließlich aus dem anderen Polymermaterial ohne das Polymermaterial auf Stärkebasis hergestellt wäre; oder
wenigstens 10 % des anderen Polymermaterials über einen Zeitraum von wenigstens 5 Jahren gemäß ASTM D-5511, ASTM-D-5338 oder ASTM D-6691 biologisch abgebaut wird, wobei das andere Polymermaterial, wenn allein genommen, nicht biologisch abbaubar ist.

2. Gegenstand gemäß Anspruch 1, wobei das andere Polymermaterial ein Polyolefin umfasst.

3. Gegenstand gemäß Anspruch 1, wobei das im Wesentlichen amorphe Polymermaterial auf Stärkebasis eine Kristallinität von weniger als 20 %, vorzugsweise weniger als 15 %, bevorzugter weniger als 10 %, aufweist.

4. Gegenstand gemäß Anspruch 1, wobei das im Wesentlichen amorphe Polymermaterial auf Stärkebasis eine Glasübergangstemperatur, Formbeständigkeitstemperatur oder Vicat-Erweichungstemperatur von höher als 70 °C, höher als 75 °C, höher als 80 °C, von 70 °C bis 100 °C oder von 80 °C bis 100 °C aufweist.

5. Gegenstand gemäß Anspruch 1, wobei das im Wesentlichen amorphe Polymermaterial auf Stärkebasis einen Young-Modul von wenigstens 1,0 GPa aufweist.

6. Gegenstand gemäß Anspruch 1, wobei das andere Polymermaterial Polyethylen, Polypropylen oder Polystyrol umfasst.

7. Gegenstand gemäß Anspruch 6, wobei der Gegenstand einen Film umfasst, wobei der Film aus einem Gemisch des Polymermaterials auf Stärkebasis und Polyethylen gebildet ist.

8. Gegenstand gemäß Anspruch 1, wobei das andere Polymermaterial eines oder mehrere von Polyethylen, Polypropylen, Polyethylenterephthalat, Polyester, Polystyrol, ABS, Nylon, Polyvinylchlorid, PBAT und Polycarbonat umfasst.

9. Gegenstand gemäß Anspruch 1, wobei das Polymermaterial auf Stärkebasis in dem Materialgemisch in einer Menge von 10 bis 40 Gew.-% des Materialgemischs enthalten ist.

10. Gegenstand gemäß Anspruch 1, wobei das Materialgemisch von 5 Gew.-% bis 40 Gew.-% an dem Polymermaterial auf Stärkebasis, von 60 Gew.-% bis 94 Gew.-% an dem anderen Polymermaterial und von 1 Gew.-% bis 9 Gew.-% an einem oder mehreren Verträglichmachern enthält.

11. Gegenstand gemäß Anspruch 1, wobei der Gegenstand einen Film umfasst, wobei der Film eine Dicke aufweist, die von 0,0025 mm (0,1 mil) bis 0,25 mm (10 mil) beträgt.

12. Gegenstand gemäß Anspruch 1, wobei die Festigkeit des Gegenstands wenigstens 10 % höher ist als sie der Gegenstand aufweisen würde, wenn er ausschließlich aus dem anderen Polymermaterial ohne das Polymermaterial auf Stärkebasis hergestellt wäre.

13. Gegenstand gemäß Anspruch 1, wobei das andere Polymermaterial ein nachhaltiges Polymermaterial umfasst, wobei wenigstens 90 % des Polymergehalts des Gegenstands aus nachhaltigen Quellen stammt.

14. Gegenstand gemäß Anspruch 1, wobei das Gemisch des im Wesentlichen amorphen Polymermaterials auf Stärkebasis und des anderen Polymermaterials ferner ein geruchsverringerndes Mittel umfasst, wobei das geruchsverringernde Mittel vorzugsweise ein organisches geruchsverringerndes Mittel ist, wobei ohne Vorhandensein des geruchsverringernden Mittels das Polymermaterial auf Stärkebasis dem Gegenstand einen charakteristischen Geruch von verbranntem Kohlenhydrat verleihen würde, wobei das organische geruchsverringernde Mittel die folgende chemische Struktur aufweist:

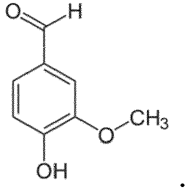

15. Verfahren zum Verleihen von erhöhter Nachhaltigkeit an einen Kunststoffgegenstand und zugleich Bereitstellen von wenigstens einem von erhöhter Festigkeit und Bioabbaubarkeit an den Kunststoffgegenstand, wobei das Verfahren umfasst:
Bereitstellen eines Polymermaterials;
Mischen des Polymermaterials mit einem im Wesentlichen amorphen Polymermaterial auf Stärkebasis, das aus Stärke und einem Weichmacher gebildet ist, wobei das Polymermaterial auf Stärkebasis eine Kristallinität von nicht mehr als 20 % aufweist und einen Wassergehalt von nicht höher als 2 Gew.-% aufweist;
Erhitzen des Gemischs auf eine Temperatur in einem Bereich von 95 °C bis 205 °C, um das Polymermaterial mit dem im Wesentlichen amorphen Polymermaterial auf Stärkebasis zu schmelzmischen, wobei das Polymermaterial auf Stärkebasis in einer Menge von 1 Gew.-% bis 40 Gew.-% des Gemischs enthalten ist; und
Bilden eines Kunststoffgegenstands aus dem Gemisch von Polymermaterial und dem im Wesentlichen amorphen Polymermaterial auf Stärkebasis, wobei wenigstens eines von:
eine Festigkeit des Gegenstands wenigstens 5 % höher ist als sie der Gegenstand aufweisen würde, wenn er ausschließlich aus dem Polymermaterial ohne das Polymermaterial auf Stärkebasis hergestellt wäre; oder
wenigstens 10 % des anderen Polymermaterials über einen Zeitraum von wenigstens 5 Jahren gemäß ASTM D-5511, ASTM-D-5338 oder ASTM D-6691 biologisch abgebaut wird, wobei das Polymermaterial, wenn allein genommen, nicht biologisch abbaubar ist.

16. Verfahren gemäß Anspruch 15, wobei Bilden des Kunststoffgegenstands Blasen eines Kunststofffilms mit einer Filmblasvorrichtung umfasst, wobei der Film aus dem Gemisch des Polymermaterials und des im Wesentlichen amorphen Polymermaterials auf Stärkebasis geblasen wird, wobei:
(A) die Filmblasvorrichtung bei dem Blasen des Kunststofffilms mit einem hohen Aufblasverhältnis von wenigstens 2,0 arbeitet, wobei das hohe Aufblasverhältnis dem geblasenen Kunststofffilm erhöhte Festigkeit verleiht; und/oder
(B) ein Düsenspalt der Filmblasvorrichtung so ausgewählt ist, dass er ein enger Düsenspalt von nicht mehr als 500 Mikrometer ist, wobei der enge Düsenspalt dem geblasenen Kunststofffilm erhöhte Festigkeit verleiht.

## Revendications

1. Article produit à partir d'un mélange de matériaux comprenant :
un matériau polymérique à base d'amidon sensiblement amorphe formé à partir d'amidon et d'un plastifiant, le matériau polymérique à base d'amidon ayant une cristallinité non supérieure à 20 %, et ayant une teneur en eau non supérieure à 2 % en poids, le matériau polymérique à base d'amidon étant compris en une quantité allant de 1 % à 40 % en poids du mélange de matériaux ; et
un autre matériau polymérique mélangé avec le matériau polymérique à base d'amidon sensiblement amorphe ;
une résistance de l'article étant au moins 5 % plus grande que celle que l'article aurait s'il était fabriqué seulement à partir de l'autre matériau polymérique, sans le matériau polymérique à base d'amidon ; et/ou
au moins 10 % de l'autre matériau polymérique étant biodégradé sur une période d'au moins 5 ans selon la norme ASTM D-5511, ASTM D-5338 ou ASTM D-6691, l'autre matériau polymérique étant non biodégradable lorsqu'il est pris seul.

2. Article selon la revendication 1, l'autre matériau polymérique comprenant une polyoléfine.

3. Article selon la revendication 1, le matériau polymérique à base d'amidon sensiblement amorphe ayant une cristallinité de moins de 20 %, préférablement moins de 15 %, plus préférablement moins de 10 %.

4. Article selon la revendication 1, le matériau polymérique à base d'amidon sensiblement amorphe ayant une température de transition vitreuse, une température de déflexion de chaleur ou une température de ramollissement Vicat supérieure à 70 °C, supérieure à 75 °C, supérieure à 80 °C, de 70 °C à 100 °C, ou de 80 °C à 100 °C.

5. Article selon la revendication 1, le matériau polymérique à base d'amidon sensiblement amorphe ayant un module de Young d'au moins 1,0 GPa.

6. Article selon la revendication 1, l'autre matériau polymérique comprenant un polyéthylène, un polypropylène ou un polystyrène.

7. Article selon la revendication 6, l'article comprenant un film, le film étant formé à partir d'un mélange du matériau polymérique à base d'amidon et de polyéthylène.

8. Article selon la revendication 1, l'autre matériau polymérique comprenant l'un ou plusieurs parmi un polyéthylène, un polypropylène, un poly(téréphtalate d'éthylène), un polyester, un polystyrène, un ABS, un nylon, un poly(chlorure de vinyle), un PBAT ou un polycarbonate.

9. Article selon la revendication 1, le matériau polymérique à base d'amidon étant compris dans le mélange de matériaux en une quantité allant de 10 à 40 % en poids du mélange de matériaux.

10. Article selon la revendication 1, le mélange de matériaux comprenant de 5 % en poids à 40 % en poids du matériau polymérique à base d'amidon, de 60 % en poids à 94 % en poids de l'autre matériau polymérique et de 1 % en poids à 9 % en poids d'un ou plusieurs agents compatibilisants.

11. Article selon la revendication 1, l'article comprenant un film, le film ayant une épaisseur qui est de 0,0025 mm (0,1 mil) à 0,25 mm (10 mils).

12. Article selon la revendication 1, la résistance de l'article étant au moins 10 % plus grande que celle que l'article aurait s'il était fabriqué seulement à partir de l'autre matériau polymérique, sans le matériau polymérique à base d'amidon.

13. Article selon la revendication 1, l'autre matériau polymérique comprenant un matériau polymérique durable, au moins 90 % de la teneur polymérique de l'article provenant de sources durables.

14. Article selon la revendication 1, le mélange du matériau polymérique à base d'amidon sensiblement amorphe et de l'autre matériau polymérique comprenant en outre un agent de réduction d'odeur, l'agent de réduction d'odeur étant préférablement un agent de réduction d'odeur organique, en l'absence de l'agent de réduction d'odeur, le matériau polymérique à base d'amidon procurerait une odeur caractéristique de glucide brûlé à l'article, l'agent de réduction d'odeur organique ayant la structure chimique suivante :

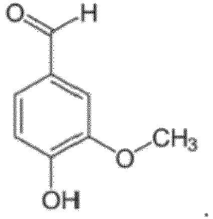

15. Procédé pour fournir une durabilité augmentée à un article de matière plastique, tout en fournissant également au moins l'une parmi une résistance augmentée et une biodégradabilité augmentée de l'article de matière plastique, le procédé comprenant :
la fourniture d'un matériau polymérique ;
le mélange avec le matériau polymérique d'un matériau polymérique à base d'amidon sensiblement amorphe formé à partir d'un amidon et d'un plastifiant, le matériau polymérique à base d'amidon ayant une cristallinité non supérieure à 20 %, et ayant une teneur en eau non supérieure à 2 % en poids ;
le chauffage du mélange jusqu'à une température dans une plage de 95 °C à 205 °C pour mélanger en fusion le matériau polymérique avec le matériau polymérique à base d'amidon sensiblement amorphe, le matériau polymérique à base d'amidon étant compris en une quantité allant de 1 % à 40 % en poids du mélange ; et
la formation d'un article de matière plastique à partir du mélange du matériau polymérique et du matériau polymérique à base d'amidon sensiblement amorphe
une résistance de l'article étant au moins 5 % plus grande que celle que l'article aurait s'il était fabriqué seulement à partir du matériau polymérique, sans le matériau polymérique à base d'amidon ; et/ou
au moins 10 % de l'autre matériau polymérique étant biodégradé sur une période d'au moins 5 ans selon la norme ASTM D-5511, ASTM D-5338 ou ASTM D-6691, le matériau polymérique étant non biodégradable lorsqu'il est pris seul.

16. Procédé selon la revendication 15, la formation de l'article de matière plastique comprenant le gonflage d'un film de matière plastique avec un appareil de gonflement de film, le film étant gonflé à partir du mélange du matériau polymérique et du matériau polymérique à base d'amidon sensiblement amorphe,
(A) l'appareil de gonflement de film fonctionnant à un rapport de soufflage élevé d'au moins 2,0 lors du gonflage du film de matière plastique, le rapport de soufflage élevé fournissant le film de matière plastique gonflé doté d'une résistance augmentée ; et/ou
(B) un espacement de matrice de l'appareil de gonflement de film étant choisi de sorte à être un espacement de matrice étroit de pas plus de 500 microns, l'espacement de matrice étroit fournissant le film de matière plastique gonflé doté d'une résistance augmentée.
